(19) Europäisches Patentamt
European Patent Office
Office européen des brevets

(11) **EP 4 783 479 A1**

(12) **EUROPEAN PATENT APPLICATION**
published in accordance with Art. 153(4) EPC

(43) Date of publication:
**29.07.2026 Bulletin 2026/31**

(21) Application number: **23956492.5**

(22) Date of filing: **27.10.2023**

(51) International Patent Classification (IPC):
***H04B 7/0456*** (2017.01)

(52) Cooperative Patent Classification (CPC):
**H04B 7/0456**

(86) International application number:
**PCT/CN2023/127108**

(87) International publication number:
**WO 2025/086246 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **HUAWEI TECHNOLOGIES CO., LTD.**
**Shenzhen 518129 (CN)**

(72) Inventors:
- WANG, Lei
  Shenzhen, Guangdong 518129 (CN)
- BI, Xiaoyan
  Shenzhen, Guangdong 518129 (CN)
- JIANG, Yisheng
  Shenzhen, Guangdong 518129 (CN)

(74) Representative: **Gill Jennings & Every LLP**
**The Broadgate Tower**
**20 Primrose Street**
**London EC2A 2ES (GB)**

(54) **SIGNAL TRANSMISSION METHOD AND COMMUNICATION APPARATUS**

(57) This application provides a signal transmission method and a communication apparatus. The method includes: A communication device receives a reference signal, where the reference signal is obtained through processing by using a precoding matrix of the reference signal, and the precoding matrix of the reference signal is determined based on a precoding matrix of a to-be-sent data signal. The communication device determines the precoding matrix of the to-be-sent data signal based on the received reference signal; and then generates the data signal based on the determined precoding matrix of the data signal, and sends the data signal. In this application, the reference signal is determined based on the precoding matrix of the to-be-sent data signal. Therefore, the communication device may determine the precoding matrix of the to-be-sent data signal based on the received reference signal. In this way, indication overheads of the precoding matrix can be reduced.

200

| First device | | Second device |

210: Receive a reference signal, where the reference signal is determined based on a precoding matrix of a to-be-sent data signal

220: Determine the precoding matrix of the data signal based on the reference signal

230: Generate the data signal based on the precoding matrix of the data signal, and send the data signal

240: Data signal

FIG. 2

EP 4 783 479 A1

**Description**

**TECHNICAL FIELD**

This application relates to the communication field, and more specifically, to a signal transmission method and a communication apparatus.

**BACKGROUND**

When a channel status is known, a transmitter processes a to-be-sent signal by using a precoding matrix that matches a channel resource, so that a precoded to-be-sent signal adapts to a channel, to reduce complexity of eliminating inter-channel impact by a receiver.

Uplink transmission is used as an example. In the conventional technology, a network device indicates a precoding matrix for uplink transmission to a terminal device by using downlink control information (downlink control information, DCI). However, as a quantity of antennas of the terminal device increases, a quantity of ranks also increases, and indication overheads of feeding back the precoding matrix by the network device by using the DCI increase.

**SUMMARY**

This application provides a signal transmission method and a communication apparatus, to reduce indication overheads of a precoding matrix.

According to a first aspect, a signal transmission method is provided. The method may be performed by an apparatus. The apparatus may be a device (for example, a terminal device or a network device), or may be a component (for example, a chip, a chip system, or a circuit) of a device. This is not limited in this application. The following mainly uses a communication apparatus as an example for description.

The method may include: receiving a reference signal, where the reference signal is obtained through processing by using a precoding matrix of the reference signal, and the precoding matrix of the reference signal is determined based on a precoding matrix of a to-be-sent data signal; determining the precoding matrix of the data signal based on the reference signal; and generating the data signal based on the precoding matrix of the data signal, and sending the data signal.

Based on the foregoing technical solution, the reference signal is processed by using the precoding matrix of the reference signal, and the precoding matrix of the reference signal is determined based on the precoding matrix of the to-be-sent data signal. Therefore, the communication apparatus may determine the precoding matrix of the to-be-sent data signal based on the received reference signal, and then may generate the data signal based on the precoding matrix of the to-be-sent data signal and send the data signal. Compared with indicating a precoding matrix by using signaling (for example, DCI), the manner provided in this embodiment of this application can reduce indication overheads of the precoding matrix.

In addition, when the precoding matrix is indicated by using signaling, an element in the precoding matrix is usually quantized, and then a quantized value is indicated. In the solution provided in this embodiment of this application, the communication apparatus determines the precoding matrix of the to-be-sent data signal based on the received reference signal. Therefore, in the solution provided in this embodiment of this application, quantization processing does not need to be performed on the precoding matrix. In this way, transmission precision of the precoding matrix can be improved.

With reference to the first aspect, in some implementations of the first aspect, a transmit port corresponding to the data signal is associated with a receive port corresponding to the reference signal.

Based on the foregoing technical solution, the transmit port corresponding to the data signal is associated with the receive port corresponding to the reference signal. In this way, the communication apparatus may determine, based on the port (that is, an antenna port) for receiving the reference signal and an association relationship between the transmit port and the receive port, the port for sending the data signal.

With reference to the first aspect, in some implementations of the first aspect, the method further includes: receiving configuration information of the reference signal, where the configuration information of the reference signal is associated with the transmit port corresponding to the data signal.

Based on the foregoing technical solution, the reference signal for indicating the precoding matrix of the data signal may be configured, and the configuration information of the reference signal is associated with the transmit port corresponding to the data signal.

With reference to the first aspect, in some implementations of the first aspect, the method further includes: receiving first indication information, where the first indication information indicates an antenna port corresponding to the reference signal, and the antenna port corresponding to the reference signal is determined based on the configuration information of the reference signal.

Based on the foregoing technical solution, when the data signal needs to be transmitted, transmission of the reference signal may be first triggered by using the first indication information. In this way, the precoding matrix of the to-be-transmitted data signal can be indicated by using the reference signal.

With reference to the first aspect, in some implementations of the first aspect, a quantity of antenna ports corresponding to the reference signal is greater than or equal to a quantity of ranks ranks corresponding to the data signal.

With reference to the first aspect, in some implementations of the first aspect, the method further includes: receiving second indication information, where the second indication information indicates that the precoding matrix of the data signal is associated with the precoding matrix of the reference signal; and determining the precoding matrix of the data signal based on the reference signal includes: determining the precoding matrix of the data signal based on the second indication information and the reference signal.

Based on the foregoing technical solution, the communication apparatus may determine, based on an indication, that the reference signal may be used to determine the precoding matrix of the to-be-sent data signal, and then determine the precoding matrix of the to-be-sent data signal based on the reference signal.

With reference to the first aspect, in some implementations of the first aspect, the precoding matrix of the reference signal is determined based on the precoding matrix of the data signal and a channel matrix.

Based on the foregoing technical solution, the precoding matrix of the reference signal received by the communication apparatus is determined based on the precoding matrix of the to-be-sent data signal of the communication apparatus and the channel matrix (that is, a channel matrix of a channel on which the communication apparatus receives the reference signal).

With reference to the first aspect, in some implementations of the first aspect, the precoding matrix of the data signal and the precoding matrix of the reference signal satisfy the following formula:

$$P_1 = H^H * \left( H * H^H \right)^{1} * P_2$$

Herein, $P_1$ represents the precoding matrix of the reference signal, $P_2$ represents the precoding matrix of the data signal, $H$ represents the channel matrix, and the superscript $H$ represents a conjugate transpose.

With reference to the first aspect, in some implementations of the first aspect, determining the precoding matrix of the data signal based on the reference signal includes: determining the precoding matrix of the data signal based on the reference signal and a reference signal that is present before the processing by using the precoding matrix of the reference signal.

Based on the foregoing technical solution, the reference signal is processed by using the precoding matrix of the reference signal, and the precoding matrix of the reference signal is determined based on the precoding matrix of the to-be-sent data signal. Therefore, the communication apparatus determines the precoding matrix of the to-be-sent data signal based on the received reference signal (that is, a reference signal that passes through a channel and on which precoding processing is performed) and the reference signal that is present before the precoding processing (that is, a reference signal that does not pass through a channel and on which precoding processing is not performed).

With reference to the first aspect, in some implementations of the first aspect, determining the precoding matrix of the data signal based on the reference signal and the reference signal that is present before the processing by using the precoding matrix of the reference signal includes: performing channel estimation on the reference signal and the reference signal that is present before the processing by using the precoding matrix of the reference signal, to obtain a channel estimation result; and determining the precoding matrix of the data signal based on the channel estimation result.

Based on the foregoing technical solution, the communication apparatus may perform channel estimation based on the received reference signal (that is, a reference signal that passes through a channel and on which precoding processing is performed) and the reference signal that is present before the precoding processing (that is, a reference signal that does not pass through a channel and on which precoding processing is not performed), to obtain an equivalent channel matrix. In this way, the precoding matrix of the to-be-sent data signal may be determined based on the equivalent channel matrix.

With reference to the first aspect, in some implementations of the first aspect, the method further includes: receiving third indication information, where the third indication information indicates the reference signal that is present before the processing by using the precoding matrix of the reference signal.

With reference to the first aspect, in some implementations of the first aspect, determining the precoding matrix of the data signal based on the channel estimation result includes: performing singular value decomposition on the channel estimation result to obtain the precoding matrix of the data signal.

For example, the precoding matrix of the data signal is a column orthogonal matrix.

Based on the foregoing technical solution, the communication apparatus may perform channel estimation based on the received reference signal (that is, a reference signal that passes through a channel and on which precoding processing is performed) and the reference signal that is present before the precoding processing (that is, a reference signal that does not pass through a channel and on which precoding processing is not performed), to obtain an equivalent channel matrix, and perform singular value decomposition on the equivalent channel matrix. In this way, the precoding matrix of the to-be-sent data signal may be determined based on a singular value decomposition result.

With reference to the first aspect, in some implementations of the first aspect, performing singular value decomposition on the channel estimation result to obtain the precoding matrix of the data signal includes: performing singular value decomposition on the channel estimation result to obtain a left singular matrix and a right singular matrix, where the precoding matrix of the data signal is determined based on the left singular matrix and the right singular matrix.

With reference to the first aspect, in some implementations of the first aspect, the precoding matrix of the data signal satisfies: the left singular matrix multiplied by a conjugate transpose of the right singular matrix.

With reference to the first aspect, in some implementations of the first aspect, the precoding matrix of the data signal includes a first matrix and a second matrix, and the precoding matrix of the reference signal is determined based on the first matrix; and determining the precoding matrix of the data signal based on the reference signal includes: determining the first matrix based on the reference signal.

Based on the foregoing technical solution, the precoding matrix of the data signal may be obtained based on at least two matrices (for example, the first matrix and the second matrix). Some matrices in the at least two matrices are indicated by using the reference signal. In this way, indication overheads of the precoding matrix can also be reduced.

With reference to the first aspect, in some implementations of the first aspect, the method further includes: receiving fourth indication information, where the fourth indication information indicates the second matrix.

Based on the foregoing technical solution, the precoding matrix of the data signal may be obtained based on at least two matrices (for example, the first matrix and the second matrix). Some matrices in the at least two matrices are indicated by using the reference signal, and a remaining part may be indicated by using signaling. In this way, not only indication overheads of the precoding matrix can be reduced, but also complexity of calculating, by the communication apparatus, the precoding matrix of the to-be-sent data signal based on the reference signal can be reduced.

According to a second aspect, a signal transmission method is provided. The method may be performed by an apparatus. The apparatus may be a device (for example, a terminal device or a network device), or may be a component (for example, a chip, a chip system, or a circuit) of a device. This is not limited in this application.

The method may include: generating a reference signal based on a precoding matrix of the reference signal, where the precoding matrix of the reference signal is determined based on a precoding matrix of a to-be-sent data signal; and sending the reference signal, where the reference signal is a downlink reference signal, and the data signal is an uplink data signal; or the reference signal is an uplink reference signal, and the data signal is a downlink data signal.

With reference to the second aspect, in some implementations of the second aspect, a transmit port corresponding to the data signal is associated with a receive port corresponding to the reference signal.

With reference to the second aspect, in some implementations of the second aspect, the method further includes: sending configuration information of the reference signal, where the configuration information of the reference signal is associated with the transmit port corresponding to the data signal.

With reference to the second aspect, in some implementations of the second aspect, the method further includes: sending first indication information, where the first indication information indicates an antenna port corresponding to the reference signal, and the antenna port corresponding to the reference signal is determined based on the configuration information of the reference signal.

With reference to the second aspect, in some implementations of the second aspect, a quantity of antenna ports corresponding to the reference signal is greater than or equal to a quantity of ranks ranks corresponding to the data signal.

With reference to the second aspect, in some implementations of the second aspect, the method further includes: sending second indication information, where the second indication information indicates that the precoding matrix of the data signal is associated with the precoding matrix of the reference signal.

With reference to the second aspect, in some implementations of the second aspect, the precoding matrix of the reference signal is determined based on the precoding matrix of the data signal and a channel matrix.

With reference to the second aspect, in some implementations of the second aspect, the precoding matrix of the data signal and the precoding matrix of the reference signal satisfy the following formula:

$$P_1 = H^H * \left( H * H^H \right)^{-1} * P_2$$

Herein, $P_1$ represents the precoding matrix of the reference signal, $P_2$ represents the precoding matrix of the data signal, $H$ represents the channel matrix, and the superscript $H$ represents a conjugate transpose.

With reference to the second aspect, in some implementations of the second aspect, the precoding matrix of the data signal is determined based on a reference signal that is present before processing by using the precoding matrix of the reference signal and the reference signal obtained through the processing by using the precoding matrix of the reference signal.

With reference to the second aspect, in some implementations of the second aspect, the method further includes: sending third indication information, where the third indication information indicates the reference signal that is present before the processing by using the precoding matrix of the reference signal.

With reference to the second aspect, in some implementations of the second aspect, the precoding matrix of the data signal is obtained by performing singular value decomposition on a channel estimation result, and the channel estimation result is determined based on the reference signal that is present before the processing by using the precoding matrix of the reference signal and the reference signal obtained through the processing by using the precoding matrix of the reference signal.

With reference to the second aspect, in some implementations of the second aspect, the precoding matrix of the data signal is determined based on a left singular matrix and a right singular matrix, and the left singular matrix and the right singular matrix are obtained by performing singular value decomposition on the channel estimation result.

With reference to the second aspect, in some implementations of the second aspect, the precoding matrix of the data signal satisfies: the left singular matrix multiplied by a conjugate transpose of the right singular matrix.

With reference to the second aspect, in some implementations of the second aspect, the precoding matrix of the data signal includes a first matrix and a second matrix, and the precoding matrix of the reference signal is determined based on the first matrix; and the method further includes: sending fourth indication information, where the fourth indication information indicates the second matrix.

For beneficial effects and possible implementations of the second aspect, refer to related descriptions of the first aspect. Details are not described herein.

According to a third aspect, a communication apparatus is provided. The apparatus is configured to perform the method provided in the first aspect or the second aspect. Specifically, the apparatus may include a unit and/or a module, for example, a processing unit and/or a communication unit, configured to perform the method provided in any one of the foregoing implementations of the first aspect or the second aspect.

In an implementation, the apparatus is a communication device (for example, a terminal device or a network device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is a chip, a chip system, or a circuit used in a communication device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The apparatus includes: a memory, configured to store a program; and at least one processor, configured to execute a computer program or instructions stored in the memory, to perform the method provided in any one of the foregoing implementations of the first aspect or the second aspect.

In an implementation, the apparatus is a communication device (for example, a terminal device or a network device).

In another implementation, the apparatus is a chip, a chip system, or a circuit used in a communication device.

According to a fifth aspect, this application provides a processor, configured to perform the method provided in the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable medium stores program code executed by a device, and the program code is used to perform the method provided in any one of the implementations of the first aspect or the second aspect.

According to a seventh aspect, a computer program product including instructions is provided. When the computer program product runs on a computer, the computer is enabled to perform the method provided in any one of the implementations of the first aspect or the second aspect.

According to an eighth aspect, a chip is provided. The chip includes a processor and a communication interface. The processor reads, through the communication interface, instructions stored in a memory, to perform the method provided in any one of the implementations of the first aspect or the second aspect.

Optionally, in an implementation, the chip further includes the memory, the memory stores a computer program or the instructions, and the processor is configured to execute the computer program or the instructions stored in the memory. When the computer program or the instructions are executed, the processor is configured to perform the method provided in any one of the implementations of the first aspect or the second aspect.

According to a ninth aspect, a communication system is provided, including a first communication apparatus and a second communication apparatus. The first communication apparatus is configured to perform the method provided in any implementation of the first aspect, and the second communication apparatus is configured to perform the method provided in any implementation of the second aspect.

## BRIEF DESCRIPTION OF DRAWINGS

FIG. 1 is a diagram of a wireless communication system applicable to an embodiment of this application;
FIG. 2 is a diagram of a signal transmission method 200 according to an embodiment of this application;
FIG. 3 is a schematic flowchart of a signal transmission method 300 according to an embodiment of this application;
FIG. 4 is a schematic flowchart of a signal transmission method 400 according to another embodiment of this application;
FIG. 5 is a schematic flowchart of a signal transmission method 500 according to another embodiment of this application;
FIG. 6 is a schematic flowchart of a signal transmission method 600 according to another embodiment of this application;
FIG. 7 is a block diagram of a communication apparatus 700 according to an embodiment of this application;
FIG. 8 is a diagram of another communication apparatus 800 according to an embodiment of this application; and
FIG. 9 is a diagram of a chip system 900 according to an embodiment of this application.

## DESCRIPTION OF EMBODIMENTS

The following describes technical solutions of this application with reference to accompanying drawings.
The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system. The technical solutions provided in this application may be further applied to a low frequency scenario, a high frequency scenario, terahertz, optical communication, a licensed (licensed) frequency band, an unlicensed (unlicensed) frequency band, and the like.
The technical solutions provided in this application may be further applied to a non-terrestrial communication network (non-terrestrial network, NTN) system such as inter-satellite communication and satellite communication. For example, a satellite communication system includes a satellite base station and a terminal device. The satellite base station provides a communication service for the terminal device. The satellite base station may also communicate with a base station. A satellite may serve as a base station, or may serve as a terminal device. The satellite may be an uncrewed aerial vehicle, a hot air balloon, a low earth orbit satellite, a medium earth orbit satellite, a high earth orbit satellite, or the like. Alternatively, the satellite may be a non-terrestrial base station, a non-terrestrial device, or the like.
The technical solutions provided in this application may be applied to dynamic grantbased transmission, or may be applied to grant-free transmission, for example, 2-step random access (2-step random access, 2-step RA), 4-step random access (4-step random access, 4-step RA), a pre-configured uplink resource (pre-configured uplink resources, PUR), or a configured grant (configured grant, CG).
A device in the communication system may send a signal to another device or receive a signal from another device. The signal may include information, signaling, data, or the like. The device may be replaced with an entity, a network entity, a network element, a communication device, a communication module, a node, a communication node, or the like. In this disclosure, the device is used as an example for description. For example, the communication system may include at least one terminal device and at least one network device. The network device may send a downlink signal to the terminal device, and/or the terminal device may send an uplink signal to the network device.
The terminal device in embodiments of this application includes various devices having a wireless communication function, and may be configured to be connected to a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, a smart grid, smart furniture, a smart office, smart wearable, smart transportation, a smart city, an uncrewed aerial vehicle, a robot, remote sensing, passive sensing, positioning, navigation and tracking, and autonomous delivery. The terminal device may be a terminal in any one of the foregoing scenarios, such as an MTC terminal or an IoT terminal. The terminal device may be user equipment (user equipment, UE) in the 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having wireless sending and receiving functions, a smart book, a vehicle, a satellite, a global positioning system (global positioning system, GPS) device, a target tracking device, an aircraft (for example, an uncrewed aerial vehicle, a helicopter, a multi-helicopter, a quadcopter, or an airplane), a ship, a remote control device, a smart home device, an industrial device, an apparatus built in the foregoing device (for example, a communication module, a modem, or a chip in the foregoing device), or another processing device connected to a wireless modem. For ease of description, an example in which the terminal device is a terminal or UE is used below for description.

It should be understood that, in some scenarios, the UE may be further configured to serve as a base station. For example, the UE may serve as a scheduling entity that provides a sidelink signal between UEs in a scenario like V2X, D2D, or P2P.

In embodiments of this application, an apparatus configured to implement a function of a terminal device, namely, a terminal apparatus, may be a terminal device, or may be an apparatus that can support a terminal device in implementing the function, for example, a chip system or a chip. The apparatus may be installed in the terminal device. In embodiments of this application, the chip system may include a chip, or may include a chip and another discrete component.

The network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point, a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that undertakes a base station function in D2D, V2X, or M2M communication, a network side device in a 6G network, a device that undertakes a base station function in a future communication system, or the like. The base station may support networks using a same access technology or different access technologies. Neither of a specific technology and a specific device form used by the network device is limited in embodiments of this application.

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

In embodiments of this application, an apparatus configured to implement a function of a network device may be a network device, or may be an apparatus that can support the network device in implementing the function, for example, a chip system or a chip. The apparatus may be installed in the network device. In embodiments of this application, the chip system may include a chip, or may include a chip and another discrete component.

The network device and the terminal device may be deployed on land, including an indoor or outdoor device, a handheld device, or a vehicle-mounted device; or may be deployed on a water surface; or may be deployed on a plane, a balloon, or a satellite in the air. A scenario in which the network device and the terminal device are located is not limited in embodiments of this application.

First, a communication system applicable to embodiments of this application is briefly described below.

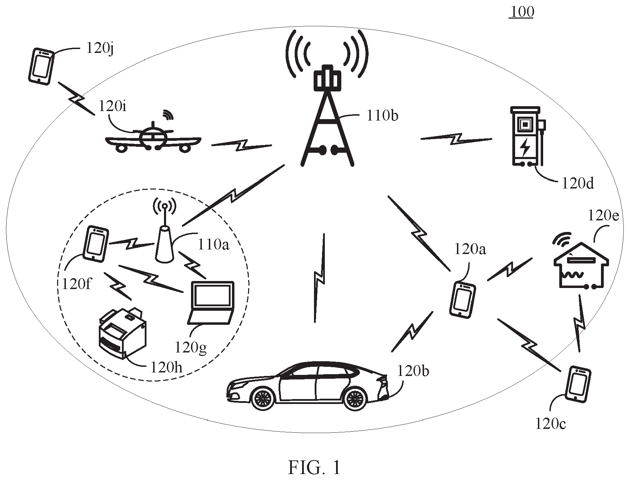

Refer to FIG. 1. FIG. 1 is a diagram of a wireless communication system applicable to an embodiment of this application.

As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more terminal devices (120a to 120j, which are collectively referred to as 12) may be interconnected or connected to one or more network devices (110a and 110b, which are collectively referred to as 110) in the radio access network 100. Network elements in the wireless communication system are connected through an interface (for example, NG or Xn) or an air interface.

FIG. 1 is merely a diagram. The wireless communication system may further include another device, for example, may further include a core network device, a wireless relay device, and/or a wireless backhaul device, which are not shown in FIG. 1.

For ease of better understanding the technical solutions of this application, some related technologies in the technical solutions of this application are described.

1. Reference signal: may also be referred to as a pilot (pilot), a reference sequence, a reference signal, or the like. For unification, the following uses the reference signal for description. The reference signal is a physical signal that carries a sequence and that is sent for implementing a specific function. Specifically, the reference signal is a physical signal generated after a specific sequence is mapped to a corresponding resource in a preset resource mapping manner.

In this application, for example, the reference signal (reference signal, RS) may be any one of the following: a channel state information reference signal (channel state information reference signal, CSI-RS), a sounding reference signal (sounding reference signal, SRS), a demodulation reference signal (demodulation reference signal, DMRS), a phase tracking reference signal (phase track reference signal, PT-RS), a cell reference signal (cell reference signal, CRS), and the like.

It should be understood that the foregoing listed reference signals are merely examples, and should not constitute any limitation on this application. This application does not exclude a possibility of defining another reference signal in a future protocol to implement a same or similar function.

2. Antenna port: may be briefly referred to as a port. It may be understood as a transmit antenna identified by a receiver, or a transmit antenna that can be spatially distinguished. The antenna port may be a logical antenna port, that is, may be a virtual antenna port or an actual antenna port. One antenna port may be configured for each virtual antenna, each virtual antenna may be a weighted combination of a plurality of physical antennas, and each antenna port may correspond to one reference signal. Therefore, each antenna port may be referred to as a reference signal port, for example, a CSI-RS port, a DMRS port, or an SRS port.

For example, a channel for transmitting a symbol on an antenna port may be inferred from a channel for transmitting another symbol on the same antenna port, that is, wireless channels through which signals sent on the same antenna port pass are basically the same.

3. Resource: Data or information may be carried by using a resource.

In time domain, a resource may include one or more time domain units (or may be referred to as time units). A time domain unit may be a symbol (symbol), an orthogonal frequency division multiplexing (orthogonal frequency division multiplexing, OFDM) symbol, a mini-slot (mini-slot), a slot (slot), a partial slot (partial slot), a subframe (subframe), a radio frame (frame), or the like.

In frequency domain, a resource may include one or more frequency domain units. A frequency domain unit may be a resource block (resource block, RB), a subcarrier (subcarrier), a resource block group (resource block group, RBG), a subband (subband), a precoding resource block group (precoding resource block group, PRG), a bandwidth part (bandwidth part, BWP), a carrier, a serving cell, or the like.

4. Precoding technology: When a channel status is known, a transmitter processes a to-be-sent signal by using a precoding matrix that matches a channel resource, so that a precoded to-be-sent signal adapts to a channel, to reduce complexity of eliminating inter-channel impact by a receiver. The precoding matrix may be a precoding matrix determined based on a channel matrix of each frequency band. For example, the channel matrix may be determined in a channel estimation manner. A vector in the precoding matrix may be referred to as a precoding vector.

To obtain a precoding matrix that can adapt to a channel, for example, the transmitter may perform channel measurement in advance by sending a reference signal, to obtain feedback of the receiver, so as to determine the precoding matrix.

In a possible implementation, the receiver may obtain a channel matrix $H$ of each frequency band through measurement based on the reference signal. For example, the receiver (for example, a network device) may determine a channel matrix on each RB based on a reference signal (for example, a sounding reference signal (sounding reference signal, SRS)) received on each resource block (resource block, RB) in a frequency band, and then perform averaging on the channel matrix on each RB, to obtain a channel matrix of the frequency band. Then, the receiver may determine a precoding matrix of each frequency band by performing singular value decomposition (singular value decomposition, SVD) on a channel matrix of each frequency band, and then feed back the precoding matrix to the transmitter (for example, a terminal device). For example, the transmitter may quantize each element of the precoding matrix of each frequency band, and then feed back a quantized value to the transmitter by using a wideband precoding matrix indicator (transmitted precoding matrix indicator, TPMI). The transmitter restores the precoding matrix of each frequency band based on the feedback of the receiver. Therefore, the transmitter can determine a precoding matrix that adapts to a channel in each frequency band, to perform precoding processing on a to-be-sent signal.

It may be understood that related descriptions of the precoding technology are merely an example for ease of understanding, and are not intended to limit the protection scope of embodiments of this application.

In an NR system, in an uplink transmission scenario, there are two transmission modes: (1) a codebook-based transmission mode; and (2) a non-codebook-based transmission mode. For example, the codebook-based transmission mode may be used in an FDD scenario or a TDD scenario, and the non-codebook-based transmission mode may be used in a TDD scenario. The following briefly describes the codebook-based transmission mode. The codebook-based transmission mode described below is merely an example, and is not limited in embodiments of this application.

(1) A network device configures, for a terminal device, W multi-port SRS resources (SRS Resource) that belong to one SRS resource set (SRS resource set), where W is an integer greater than 1 or equal to 1.
(2) Assuming that a quantity of SRS ports is P, the terminal device sends W P-port SRSs by using SRS resources. Different SRS resources may have different beam (beam) directions.
(3) The network device receives the SRSs, and performs channel measurement based on the received SRSs, to determine channel state information (channel state information, CSI) of an uplink channel.
(4) When uplink data needs to be transmitted, the network device may schedule an uplink resource. Specifically, the network device may indicate the following information: (1) an SRS resource indicator (SRS resource indicator, SRI), that is, uplink beam information; and (2) a quantity of layers used in uplink (that is, a rank indication (rank indication, RI)), a TPMI, and the like in a beam corresponding to the SRS resource. In addition, the network device may further configure L demodulation reference signal (demodulation reference signal, DMRS) ports, where L is an integer greater than 1 or equal to 1.
(5) The terminal device first inserts DMRSs of the L ports into L data streams based on an indication of the network device, and then performs precoding based on an indication of the TPMI, to obtain signals of the P ports. Then, the terminal device sends the signals of the P ports. For example, the terminal device may send the signals of the P ports in a manner that is the same as the previous manner of sending the P-port SRSs.

In the conventional technology, the TPMI is carried in downlink control information (downlink control information, DCI), that is, the network device indicates a precoding matrix for uplink transmission to the terminal device by using the DCI. As a scale of an antenna array in a system increases, a quantity of antenna ports that can be supported increases, and a quantity of ranks for uplink transmission of the terminal device also increases. Because a precoding matrix is in direct proportion to the quantity of ranks, indicating the precoding matrix for uplink transmission to the terminal device by using the DCI means high feedback overheads. In addition, as a bandwidth increases, a subband-based codebook is also considered for uplink transmission. In this case, feedback overheads have a substantial increase.

In view of this, this application provides a manner in which a precoding matrix indicator is carried by using a reference signal, so that indication overheads of the precoding matrix indicator can be reduced. For example, a precoding matrix of a to-be-sent data signal is determined based on a received reference signal by using a feature of orthogonality of the precoding matrix.

Before the solutions of this application are described, the following descriptions are provided.

(1) In this application, an "indication" may include a direct indication, an indirect indication, an explicit indication, or an implicit indication. When a piece of indication information is described as indicating A, it may be understood that the indication information carries A, directly indicates A, or indirectly indicates A.

In this application, information indicated by indication information is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for separate sending. In addition, sending periods and/or sending occasions of the sub-information may be the same or may be different.

(2) In this application, "sending" and "receiving" represent signal transfer directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY via another unit or module through an air interface. "Sending" may alternatively be understood as "outputting" of a chip interface, and "receiving" may alternatively be understood as "inputting" of the chip interface. In other words, sending and receiving may be performed between devices, for example, between a network device and a terminal device, or may be performed within a device. For example, sending or receiving is performed between components, modules, chips, software modules, or hardware modules in a device by using a bus, a cable, or an interface.

(3) In embodiments of this application, matrix transformation is involved a plurality of times. For ease of understanding, uniform descriptions are provided herein. The superscript H represents a conjugate transpose. For example, $A^H$ represents a conjugate transpose of a matrix (or vector) $A$. The superscript -1 represents an inverse of a matrix. For example, $A^{-1}$ represents an inverse matrix of a matrix (or vector) $A$. For brevity, descriptions of same or similar cases are omitted below.

(4) In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

(5) In this application, "first" and "second" are merely for ease of description, and are intended to distinguish objects, but are not intended to limit the scope of embodiments of this application, and are not intended to describe an order or a sequence of features. It should be understood that objects described in such a way are interchangeable in an appropriate circumstance, so that a solution other than embodiments of this application can be described.

The following describes in detail the method provided in embodiments of this application with reference to the accompanying drawings. Embodiments provided in this application may be applied to the communication system shown in FIG. 1. This is not limited.

In the following embodiments, a first device and a second device are used as examples for description.

The first device may be a terminal device or a component (for example, a chip or a circuit) of a terminal device, or the first device may be a network device or a component (for example, a chip or a circuit) of a network device, or the first device may be an AI node or a component (for example, a chip or a circuit) of an AI node.

The second device may be a terminal device or a component (for example, a chip or a circuit) of a terminal device, or the first device may be a network device or a component (for example, a chip or a circuit) of a network device, or the first device may be an AI node or a component (for example, a chip or a circuit) of an AI node.

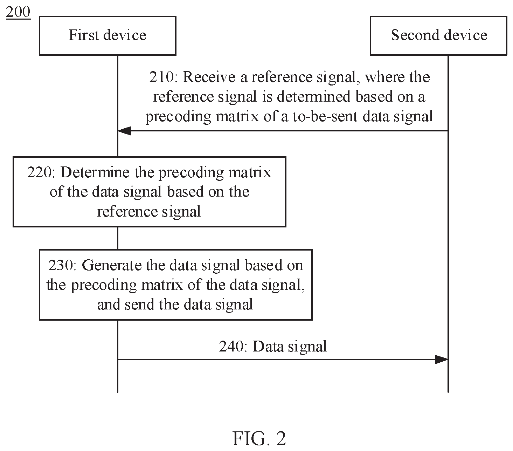

Refer to FIG. 2. FIG. 2 is a diagram of a signal transmission method 200 according to an embodiment of this application. The method 200 shown in FIG. 2 may include the following steps.

210: A first device receives a reference signal, where the reference signal is obtained through processing by using a precoding matrix of the reference signal, and the precoding matrix of the reference signal is determined based on a precoding matrix of a to-be-sent data signal.

Correspondingly, a second device sends the reference signal.

In a possible case, the first device is a terminal device, and the second device is a network device. In this case, the reference signal is a downlink reference signal, for example, a channel state information reference signal (channel state information reference signal, CSI-RS). In addition, in this case, the to-be-sent data signal is an uplink data signal, for example, a physical uplink shared channel (physical uplink shared channel, PUSCH).

In another possible case, the first device is a network device, and the second device is a terminal device. In this case, the reference signal is an uplink reference signal, for example, an SRS. In addition, in this case, the to-be-sent data signal is a downlink data signal, for example, a physical downlink shared channel (physical downlink shared channel, PDSCH).

The reference signal is obtained through the processing by using the precoding matrix of the reference signal, that is, the reference signal received by the first device is a reference signal obtained through precoding processing. For example, it is assumed that a reference signal that is present before the precoding processing is a reference signal #1, the reference signal obtained through the precoding processing is a reference signal #2, and the reference signal #2 is obtained by processing the reference signal #1 and the precoding matrix (for example, referred to as $P_1$). In a possible implementation, the reference signal #2 = the reference signal #1 * $P_1$.

The precoding matrix of the reference signal is determined based on the precoding matrix of the to-be-sent data signal. Specifically, the second device generates the reference signal based on the precoding matrix of the to-be-sent data signal. For example, the second device may determine the precoding matrix of the reference signal based on the precoding matrix of the to-be-sent data signal, generate the reference signal based on the precoding matrix of the reference signal, and send the reference signal. For another example, the second device may directly generate the reference signal based on the precoding matrix of the to-be-sent data signal, and send the reference signal.

Based on this, there is an association relationship between the precoding matrix of the to-be-sent data signal and the precoding matrix of the reference signal. In this way, the first device may subsequently determine the precoding matrix of the to-be-sent data signal based on the precoding matrix of the received reference signal, then generate the data signal based on the precoding matrix of the to-be-sent data signal, and send the data signal. Compared with indicating the precoding matrix of the to-be-sent data signal to the first device by using signaling (for example, DCI), the manner provided in this embodiment of this application can reduce signaling overheads. For ease of description and brevity, the to-be-sent data signal is referred to as a data signal below.

It is assumed that the precoding matrix of the reference signal is $P_1$, matrix of the data signal is $P_2$. $P_1 = fP_2$), where $f$ represents a function.

Optionally, the precoding matrix of the reference signal is determined based on the precoding matrix of the data signal and a channel matrix. The channel matrix is a channel matrix corresponding to the reference signal. For example, if the reference signal is a downlink reference signal, the channel matrix is a downlink channel matrix; or if the reference signal is an uplink reference signal, the channel matrix is an uplink channel matrix.

It is assumed that the precoding matrix of the reference signal is $P_1$, matrix of the data signal is $P_2$, H. $P_1 = g(P_2, HP_1 = H^{11} *(H * H^H)^1 * P_2$.

220: The first device determines the precoding matrix of the data signal based on the reference signal.

For example, the precoding matrix of the data signal is a column orthogonal matrix. In this way, when the precoding matrix of the data signal is subsequently calculated, a feature of the column orthogonal matrix may be used, to simplify a calculation process.

For example, dimensions of the precoding matrix of the data signal are $N \times L$. N represents a quantity of antenna ports of the first device (that is, a quantity of transmit ports of the data signal), and L represents a quantity of ranks (that is, a quantity of ranks for transmitting the data signal). For example, the quantity of antenna ports of the first device is less than or equal to a quantity of antenna ports of the second device.

The reference signal received by the first device is a reference signal processed based on the precoding matrix of the reference signal, and the precoding matrix of the reference signal is determined based on the precoding matrix of the data signal. Therefore, the first device may determine the precoding matrix of the data signal based on the reference signal.

Optionally, the first device determines the precoding matrix of the data signal based on the reference signal and a reference signal that is present before the processing by using the precoding matrix of the reference signal. For example, it is assumed that a reference signal that is present before the precoding processing is a reference signal #1, and the reference signal obtained through the precoding processing is a reference signal #2. The first device may determine the precoding matrix of the data signal based on the reference signal #1 and the reference signal #2.

In a possible implementation, the first device performs channel estimation based on the reference signal #1 and the reference signal #2 to obtain a channel estimation result, and then determines the precoding matrix of the data signal based on the channel estimation result. Specifically, the first device performs channel estimation based on the reference signal #1 and the reference signal #2 to obtain an equivalent channel matrix, and then calculates the precoding matrix of the data signal based on the equivalent channel matrix.

A manner in which the first device obtains the reference signal #1 is not limited. For example, the first device receives third indication information, and the third indication information indicates the reference signal that is present before the processing by using the precoding matrix of the reference signal, that is, the third indication information indicates the reference signal #1. For example, the third indication information indicates a generation manner of a sequence of the reference signal #1, for example, a generation parameter or a cyclic shift. In this way, the first device may learn of the reference signal #1 based on the third indication information, and then may perform channel estimation based on the reference signal #1 and the received reference signal #2.

Optionally, that the first device determines the precoding matrix of the data signal based on the channel estimation result includes: The first device performs SVD on the channel estimation result to obtain a left singular matrix and a right singular matrix, where the precoding matrix of the data signal is determined based on the left singular matrix and the right singular matrix. Specifically, the first device performs channel estimation based on the reference signal #1 and the reference signal #2 to obtain an equivalent channel matrix, performs SVD on the equivalent channel matrix to obtain the left singular matrix and the right singular matrix, and then determines the precoding matrix of the data signal based on the obtained left singular matrix and right singular matrix. For example, the precoding matrix of the data signal satisfies: the left singular matrix multiplied by a conjugate transpose of the right singular matrix. The following provides specific descriptions.

Assuming that $P_1 = H^{11} *(H * H^H)^1 * P_2$, and the reference signal received by the first device is $Y$, $Y$ may be expressed as:

$$Y = H * X + N = H * H^{H} * \left( H * H^{H} \right)^{1} * P_2 * S + N = P_2 * S + N .$$

Herein, $H$ represents the channel matrix; $X$ represents the reference signal sent by the second device, that is, a reference signal on which precoding processing is performed and that does not pass through a channel; $S$ represents a reference signal on which precoding processing is not performed, that is, the reference signal #1 described above; $N$ represents interference and noise; and $P_2$ represents the precoding matrix of the data signal. In an actual communication scenario, the following two points usually need to be considered: (1) Interference and noise may exist in a process of receiving a reference signal. (2) A channel matrix obtained by the second device may have a delay, and consequently an actual channel matrix does not match the channel matrix obtained by the second device. Based on the foregoing possible cases, assuming that the precoding matrix that is of the data signal and that is determined by the first device based on the channel estimation result is $P_2'$, $\|P_2' - P_2\|$ as small as possible needs to be considered, where $\|\ \|$ represents calculating a norm of a matrix. It can be learned through derivation that, when $P_2$ is a product of a left singular matrix of $P_2'$ $P_2'$, $\|P_2' - P_2\|$ is very small. Therefore, the left singular matrix and the right singular matrix may be obtained through SVD, to obtain $P_2$. $P_2'$, $P_2' = U \cdot \cdot V^H$ is set. In this case, $P_2 = U * V^H$. $U$ $V$ singular matrix respectively, $U$ and $V$ are unitary matrices, and $\Sigma$ is a diagonal matrix.

230: The first device generates the data signal based on the precoding matrix of the data signal.

240: The first device sends the data signal.

To be specific, the first device performs precoding processing on the to-be-sent data signal, and then sends a data signal obtained through the precoding processing. For example, it is assumed that the to-be-sent data signal is a data signal #1, the data signal obtained through the precoding processing is a data signal #2, and the data signal #2 is obtained by processing the data signal #1 and the precoding matrix (for example, referred to as $P_2$). In a possible implementation, the data signal #2 = the data signal #1 * $P_2$.

A receiver of the data signal is not limited in this embodiment of this application. For example, the second device receives the data signal. To be specific, the second device processes the reference signal in a specific manner (that is, the second device performs precoding processing on the reference signal based on the precoding matrix of the data signal to be received by the second device), then indicates the precoding matrix of the to-be-received data signal to the first device by using the reference signal, and receives the data signal. For another example, another device receives the data signal. To be specific, the second device processes the reference signal in a specific manner (that is, the second device performs precoding processing on the reference signal based on the precoding matrix of the data signal to be sent by the first device), and then indicates the precoding matrix of the to-be-sent data signal to the first device by using the reference signal. In this way, the first device may process the data signal based on the precoding matrix, and then send the data signal to the another device. For ease of understanding, an example in which the second device receives the data signal is used below for description.

Based on this embodiment of this application, the first device may determine the precoding matrix of the to-be-sent data signal based on the received reference signal. Specifically, the precoding matrix of the reference signal is determined based on the precoding matrix of the data signal. Therefore, the first device may perform, by using a relationship between the precoding matrix of the reference signal and the precoding matrix of the data signal, channel estimation based on the received reference signal obtained through the precoding processing and the reference signal that is present before the precoding processing, and then determine the precoding matrix of the data signal based on a channel estimation result. For example, if the precoding matrix of the data signal is a column orthogonal matrix, SVD is performed on the channel estimation result by using a feature of the column orthogonal matrix, to obtain a left singular matrix and a right singular matrix, and then the precoding matrix of the data signal is determined based on the left singular matrix and the right singular matrix. For example, the precoding matrix of the data signal is equal to the left singular matrix multiplied by a conjugate transpose of the right singular matrix.

Optionally, a transmit port corresponding to the data signal is associated with a receive port corresponding to the reference signal. The transmit port corresponding to the data signal represents an antenna port used by the first device to send the data signal, and the receive port corresponding to the reference signal represents an antenna port used by the first device to receive the reference signal. The transmit port corresponding to the data signal is designed to be associated with the receive port corresponding to the reference signal, so that the first device may determine the transmit port of the data signal based on the receive port corresponding to the reference signal.

For example, an association relationship between the transmit port corresponding to the data signal and the receive port corresponding to the reference signal may exist, for example, be stored or transmitted, in a form of a table, a function, a text, or a character string. Table 1 is an example of presenting the association relationship between the transmit port corresponding to the data signal and the receive port corresponding to the reference signal in a form of a table.

Table 1

| Transmit port corresponding to the data signal | Receive port corresponding to the reference signal |
| --- | --- |
| Port #A1 | Port #B1 |
| Port #A2 | Port #B2 |
| Port #A3 | Port #B3 |

Table 1 is used as an example. For ease of understanding, several examples are briefly listed.

For example, if the receive port corresponding to the reference signal includes the port #B1, the transmit port corresponding to the data signal includes the port #A1. Specifically, for the first device, the first device determines the precoding matrix of the data signal based on the reference signal received on the port #B1. In this case, the first device generates the data signal based on the precoding matrix of the data signal, and sends the data signal on the port #A1.

For another example, if the receive port corresponding to the reference signal includes the port #B1 and the port #B3, the transmit port corresponding to the data signal includes the port #A1 and the port #A3. Specifically, for the first device, the first device determines the precoding matrix of the data signal based on reference signals received on the port #B1 and the port #B3. In this case, the first device generates the data signal based on the precoding matrix of the data signal, and sends the data signal on the port #A1 and the port #A3.

In embodiments of this application, a port #Ai and a port #Bi (i is an integer greater than 1 or equal to 1) are merely names for differentiation, and specific content of the port #Ai and the port #Bi does not limit the protection scope of embodiments of this application. For example, the port #Ai and the port #Bi may be the same or different. This is not limited.

It may be understood that Table 1 is merely an example for description. Any variation of Table 1 is applicable to embodiments of this application.

Optionally, the method 200 further includes: The first device receives configuration information of the reference signal, where the configuration information of the reference signal is associated with the transmit port corresponding to the data signal. Based on this, when the second device indicates the precoding matrix of the to-be-transmitted data signal (which, for the first device, is the data signal to be sent by the first device) by using the reference signal, the configuration information of the reference signal may be configured, and the configuration information of the reference signal (or some information in the configuration information of the reference signal) is associated with the transmit port corresponding to the to-be-transmitted data signal. In this way, the precoding matrix of the to-be-transmitted data signal can be indicated by the reference signal.

The configuration information of the reference signal includes information related to the reference signal. For example, the configuration information of the reference signal includes at least one of the following: the receive port corresponding to the reference signal, a time domain resource of the reference signal, a frequency domain resource of the reference signal, and the transmit port corresponding to the data signal associated with the receive port corresponding to the reference signal.

The time domain resource of the reference signal represents a time domain resource used to transmit the reference signal. For example, the time domain resource of the reference signal includes a time domain resource of the reference signal on each receive port corresponding to the reference signal. For example, assuming that the receive port corresponding to the reference signal includes the port #B1 and the port #B2, the time domain resource of the reference signal includes a time domain resource used to receive the reference signal on the port #B1 and/or a time domain resource used to receive the reference signal on the port #B2.

The frequency domain resource of the reference signal represents a frequency domain resource used to transmit the reference signal. For example, the frequency domain resource of the reference signal includes a frequency domain resource of the reference signal on each receive port corresponding to the reference signal. For example, assuming that the receive port corresponding to the reference signal includes the port #B1 and the port #B2, the frequency domain resource of the reference signal includes a frequency domain resource used to receive the reference signal on the port #B1 and/or a frequency domain resource used to receive the reference signal on the port #B2.

The transmit port corresponding to the data signal associated with the receive port corresponding to the reference signal represents a port associated with the receive port corresponding to the reference signal, and the port is used to send the data signal. For example, assuming that the receive port corresponding to the reference signal includes the port #B1 and the port #B2, the port #B1 is associated with the transmit port #A1 of the data signal, and the port #B2 is associated with the transmit port #A2 of the data signal, the configuration information of the reference signal may include the port #A1 and the port #A2.

The following lists several examples.

Example 1: The configuration information of the reference signal includes the receive port corresponding to the reference signal, and the receive port corresponding to the reference signal is associated with the transmit port corresponding to the data signal. For details, refer to the foregoing related descriptions. Details are not described herein again.

Example 2: The configuration information of the reference signal includes the time domain resource of the reference signal, and the time domain resource of the reference signal is associated with the transmit port corresponding to the data signal.

For example, an association relationship between the time domain resource of the reference signal and the transmit port corresponding to the data signal may exist, for example, be stored or transmitted, in a form of a table, a function, a text, or a character string. Table 2 is an example of presenting the association relationship between the time domain resource of the reference signal and the transmit port corresponding to the data signal in a form of a table.

Table 2

| Time domain resource of the reference signal | Transmit port corresponding to the data signal |
|---|---|
| Time domain unit #1 | Port #A4 |
| Time domain unit #2 | Port #A5 |
| Time domain unit #3 | Port #A6 |

Table 2 is used as an example. For ease of understanding, several examples are briefly listed.

For example, if the time domain resource of the reference signal includes the time domain unit #1, the transmit port corresponding to the data signal includes the port #A4. Specifically, for the first device, the first device determines the precoding matrix of the data signal based on the reference signal received on the time domain unit #1. In this case, the first device generates the data signal based on the precoding matrix of the data signal, and sends the data signal on the port #A4.

For another example, if the time domain resource of the reference signal includes the time domain unit #2 and the time domain unit #3, the transmit port corresponding to the data signal includes the port #A5 and the port #A6. Specifically, for the first device, the first device determines the precoding matrix of the data signal based on reference signals received on the time domain unit #2 and the time domain unit #3. In this case, the first device generates the data signal based on the precoding matrix of the data signal, and sends the data signal on the port #A5 and the port #A6.

It may be understood that Table 2 is merely an example for description. Any variation of Table 2 is applicable to embodiments of this application.

Example 3: The configuration information of the reference signal includes the frequency domain resource of the reference signal, and the frequency domain resource of the reference signal is associated with the transmit port corresponding to the data signal. For details, refer to the foregoing related descriptions in Example 2. Details are not described herein again.

Further, optionally, the method 200 further includes: The first device receives first indication information, where the first indication information indicates an antenna port corresponding to the reference signal, and the antenna port corresponding to the reference signal is determined based on the configuration information of the reference signal. Correspondingly, the second device sends the first indication information. Based on this, when the second device needs to transmit the data signal, the second device may dynamically schedule the reference signal. Specifically, when determining to transmit the data signal, the second device may first determine the antenna port corresponding to the reference signal based on the configuration information of the reference signal and information about the to-be-transmitted data signal (such as a quantity of ranks and the receive port corresponding to the to-be-transmitted data signal), then indicate the antenna port corresponding to the reference signal to the first device, and then send the reference signal.

Optionally, a quantity of antenna ports corresponding to the reference signal is related to the quantity of ranks corresponding to the data signal. Based on this, a quantity of antenna ports used by the first device to receive the reference signal is associated with the quantity of ranks of the data signal to be sent subsequently. The quantity of ranks corresponding to the data signal represents a quantity of ranks for transmitting the data signal. In a possible implementation, the quantity of antenna ports corresponding to the reference signal is greater than or equal to the quantity of ranks corresponding to the data signal. For example, the quantity of antenna ports corresponding to the reference signal is equal to the quantity of ranks corresponding to the data signal.

Optionally, in step 220, that the first device determines the precoding matrix of the data signal based on the reference signal includes: The first device determines the precoding matrix of the data signal based on the reference signal and an indication; or the first device determines the precoding matrix of the data signal based on the reference signal by default. The following lists two implementations.

In a first possible implementation, the first device determines the precoding matrix of the data signal based on the reference signal and the indication.

For example, the first device receives second indication information, where the second indication information indicates that the precoding matrix of the data signal is associated with the precoding matrix of the reference signal. The first device determines the precoding matrix of the data signal based on the reference signal and the second indication information. Specifically, the second indication information indicates that the precoding matrix of the data signal is associated with the precoding matrix of the reference signal. Therefore, the first device determines that the reference signal received in step 210 may be used to determine the precoding matrix of the data signal, and therefore determines the precoding matrix of the data signal based on the reference signal. Specific content indicated by the second indication information is not limited in this embodiment of this application. For example, that the second indication information indicates that the precoding matrix of the data signal is associated with the precoding matrix of the reference signal may be replaced with any one of the following: The second indication information indicates that the precoding matrix of the data signal is determined based on the reference signal, the second indication information indicates that the precoding matrix of the reference signal is determined based on the precoding matrix of the to-be-sent data signal, or the second indication information indicates an indication manner (or a determining manner) of the precoding matrix of the data signal.

In a second possible implementation, the first device determines the precoding matrix of the data signal based on the reference signal by default.

For example, a specially designed reference signal may be used to determine the precoding matrix of the data signal. In this way, after the first device receives the reference signal, if the reference signal is the specially designed reference signal, the first device needs to determine the precoding matrix of the data signal based on the reference signal by default. The special design of the reference signal may be reflected in a sequence of the reference signal, or may be reflected in configuration information of the reference signal, or may be reflected in an identifier of the reference signal, or the like. This is not limited.

Optionally, the precoding matrix of the data signal includes at least two matrices, and the precoding matrix of the reference signal is determined based on some of the at least two matrices. In other words, in step 220, the first device determines the some matrices based on the reference signal. That the precoding matrix of the data signal includes at least two matrices may be understood as that the precoding matrix of the data signal is obtained by using the at least two matrices. For example, the precoding matrix of the data signal is obtained by multiplying the at least two matrices.

For example, the at least two matrices include a first matrix and a second matrix. The precoding matrix of the reference signal is determined based on the first matrix. In other words, in step 220, the first device determines the first matrix based on the reference signal. For a specific determining manner, refer to the foregoing related descriptions. Further, optionally, the method 200 further includes: The first device receives fourth indication information, where the fourth indication information indicates the second matrix. In this way, the first device may determine the precoding matrix of the data signal based on the first matrix determined based on the reference signal and the second matrix indicated by the fourth indication information, then generate the data signal based on the precoding matrix of the data signal, and send the data signal. That the fourth indication information indicates the second matrix may be: The fourth indication information includes the second matrix, or the fourth indication information includes information that can be used to determine the second matrix.

For ease of understanding, the following provides a specific procedure by using an example in which the first device is a terminal device and the second device is a network device. For content that is not described in detail below, refer to the descriptions in the method 200. Details are not described below again.

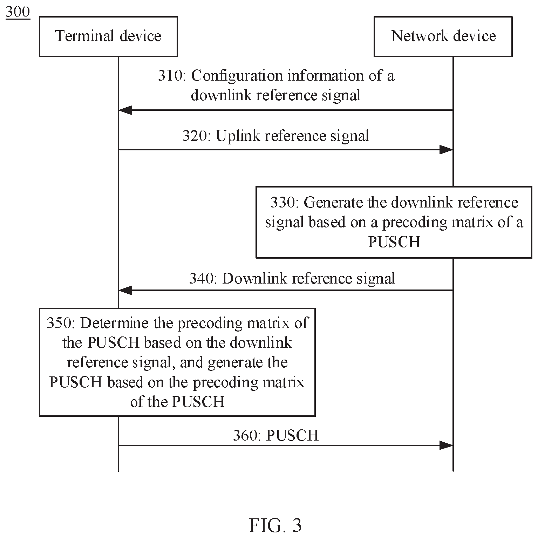

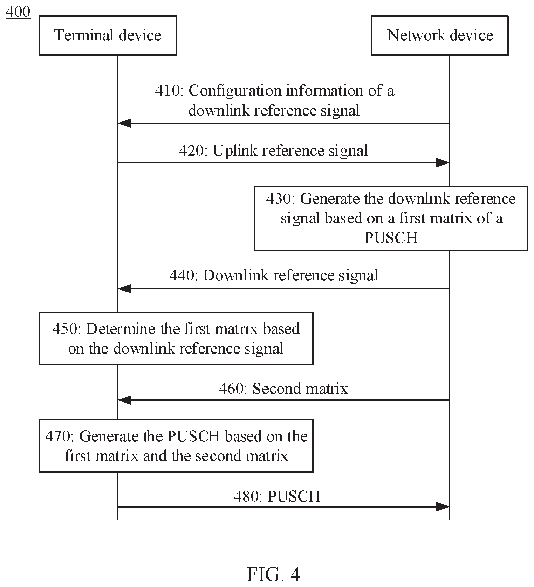

First, an example in which a reference signal is a downlink reference signal and a data signal is a PUSCH is used for description with reference to FIG. 3 and FIG. 4.

Refer to FIG. 3. FIG. 3 is a schematic flowchart of a signal transmission method 300 according to an embodiment of this application. The method 300 shown in FIG. 3 may include the following steps.

310: A network device sends configuration information of a downlink reference signal. Correspondingly, a terminal device receives the configuration information of the downlink reference signal.

The configuration information of the downlink reference signal includes information related to the downlink reference signal. For example, the configuration information of the downlink reference signal includes at least one of the following: a receive port corresponding to the downlink reference signal, a time domain resource of the downlink reference signal, a frequency domain resource of the downlink reference signal, and a transmit port corresponding to a PUSCH associated with the receive port corresponding to the downlink reference signal. For details, refer to the related descriptions in the method 200. Details are not described herein again.

For example, the downlink reference signal is a CSI-RS or the like.

Optionally, the network device configures a UL precoding matrix transmission mode for the terminal device. Specifically, the network device may determine to indicate a precoding matrix of the PUSCH in the manner provided in this embodiment of this application, that is, indicate the precoding matrix of the PUSCH by using the downlink reference signal. The network device may send second indication information to the terminal device, to indicate the UL precoding transmission mode.

320: The terminal device sends an uplink reference signal. Correspondingly, the network device receives the uplink reference signal.

For example, the uplink reference signal is an SRS or the like.

For example, the network device may perform channel measurement based on the uplink reference signal, to determine the precoding matrix of the PUSCH. For details, refer to the foregoing descriptions in the term explanation part. In addition, the network device may further obtain a downlink channel matrix $H$ based on channel reciprocity.

330: The network device generates the downlink reference signal based on the precoding matrix of the PUSCH.

For example, the network device determines a precoding matrix of the downlink reference signal based on the precoding matrix of the PUSCH, and then generates the downlink reference signal based on the precoding matrix of the downlink reference signal.

In a possible implementation, the precoding matrix $P_2$ of the PUSCH and the precoding matrix $P_1$ of the downlink reference signal satisfy: $P_1 = H^{11} * (H * H^H)^{1} * P_2$, device may determine the precoding matrix $P_1$ of the downlink reference signal based on the formula, and the precoding matrix $P_2$ of the PUSCH and the downlink channel matrix $H$ that are determined in step 320.

For example, that the network device generates the downlink reference signal based on the precoding matrix of the downlink reference signal may be implemented in the following manner: It is assumed that a downlink reference signal that is present before precoding processing is $S$, and a downlink reference signal $X$ obtained through the precoding processing satisfies: $X = P_1 * S$ for uplink transmission is L, and a quantity of antenna ports of the terminal device is N, dimensions of $X$ are M $\times$ L, dimensions of $S$ are L $\times$ L, dimensions of the precoding matrix $P_1$ of the downlink reference signal are M $\times$ L, dimensions of the precoding matrix $P_2$ of the PUSCH are N $\times$ L, and dimensions of the downlink channel matrix $H$ are $N \times M$.

It may be understood that the foregoing is an example for description. The network device may alternatively directly generate the downlink reference signal based on the precoding matrix of the PUSCH. For example, the downlink reference signal $X$ generated by the network device satisfies: $X = H^{11} * (H * H^H)^{1} * P_2 * S$.

340: The network device sends the downlink reference signal. Correspondingly, the terminal device receives the downlink reference signal.

Optionally, when the network device needs to perform uplink transmission, the network device sends the downlink reference signal, to indicate the precoding matrix of the to-be-transmitted PUSCH to the terminal device by using the downlink reference signal.

For example, in step 340, the network device may send downlink reference signals of L ports. Specifically, if the network device determines that PUSCH transmission needs to be performed, and a quantity of ranks corresponding to the PUSCH is L, the network device may generate the downlink reference signal based on the precoding matrix of the PUSCH determined in step 320, and send the downlink reference signals of the L ports, for example, downlink reference signals of L orthogonal ports, so that the terminal device may determine the precoding matrix of the to-be-sent PUSCH based on the downlink reference signals of the L ports, and then generate and send the PUSCH.

A time-frequency resource of the downlink reference signal may be determined based on the configuration information in step 310 and/or a time-frequency resource of the PUSCH.

In an example, the time-frequency resource of the downlink reference signal is determined based on the configuration information in step 310.

For example, the method 300 includes step 310, and the configuration information in step 310 includes the time-frequency resource of the downlink reference signal. In this case, the time-frequency resource of the downlink reference signal in step 340 may be determined based on the configuration information in step 310.

In another example, the time-frequency resource of the downlink reference signal is determined based on the time-frequency resource of the PUSCH.

For example, the method 300 does not include step 310, or the method 300 includes step 310, and the configuration information in step 310 does not include the time-frequency resource of the downlink reference signal. In this case, the time-frequency resource of the downlink reference signal in step 340 may be determined based on the time-frequency resource of the PUSCH. For example, the time-frequency resource of the downlink reference signal is associated with the time-frequency resource of the PUSCH. Therefore, the network device may determine the time-frequency resource of the downlink reference signal based on the time-frequency resource of the PUSCH.

In another example, the time-frequency resource of the downlink reference signal is determined based on the configuration information in step 310 and the time-frequency resource of the PUSCH.

For example, the method 300 includes step 310, and the configuration information in step 310 includes a time domain resource of the downlink reference signal. In this case, the time domain resource of the downlink reference signal in step 340 may be determined based on the configuration information in step 310, and a frequency domain resource of the downlink reference signal may be determined based on a frequency domain resource of the PUSCH. For example, the frequency domain resource of the downlink reference signal is associated with the frequency domain resource of the PUSCH. Therefore, the network device may determine the frequency domain resource of the downlink reference signal based on the frequency domain resource of the PUSCH.

350: The terminal device determines the precoding matrix of the PUSCH based on the downlink reference signal, and generates the PUSCH based on the precoding matrix of the PUSCH.

In a possible implementation, the terminal device performs channel estimation based on the received downlink reference signal and the downlink reference signal (that is, the foregoing $S$) that is present before the precoding processing to obtain a channel estimation result, then performs SVD processing on the channel estimation result to obtain a left singular matrix and a right singular matrix, and then multiplies the left singular matrix by a conjugate transpose of the right singular matrix to obtain the precoding matrix of the PUSCH.

For example, it is assumed that the downlink reference signal received by the terminal device is $Y$. In consideration of impact of interference and noise, for example, $Y$ may be represented as: $Y = H * X + N = H * H^{11} *H * H^H)^1 *P_2*S+N = P_2*S+N.$ The terminal device performs channel estimation based on $Y$ and $S$ to obtain an equivalent channel matrix $P_2'$, on $P_2'$, $P_2' = U \cdot \Sigma \cdot V^H$. In this case, $P_2 = U * V^H$. $U$ $V$ matrix and the right singular matrix respectively.

That the terminal device generates the PUSCH based on the precoding matrix of the PUSCH may be implemented in the following manner: It is assumed that a PUSCH that is present before the precoding processing is PUSCH', and the PUSCH obtained through the precoding processing is $P_2 *$ PUSCH'.

360: The terminal device sends the PUSCH. Correspondingly, the network device receives the PUSCH.

A transmit port corresponding to the PUSCH is a port associated with a receive port corresponding to the downlink reference signal. An association relationship between the transmit port corresponding to the PUSCH and the receive port corresponding to the downlink reference signal may be carried in the configuration information in step 310, or may be predefined or pre-configured. This is not limited herein. For the association relationship between the transmit port corresponding to the PUSCH and the receive port corresponding to the downlink reference signal, refer to related descriptions in the method 200. Details are not described herein again.

Optionally, the terminal device further sends a DMRS used to demodulate the PUSCH. In this case, a transmit port corresponding to the DMRS may also be a port associated with the receive port corresponding to the downlink reference signal. In other words, the receive port corresponding to the downlink reference signal is associated with the transmit ports corresponding to the PUSCH and the DMRS.

Based on the foregoing embodiment, the network device may indicate a precoding matrix of an uplink signal to the terminal device by using the downlink reference signal. Specifically, the terminal device performs channel estimation based on the received downlink reference signal, and performs SVD on a channel estimation result, to obtain the precoding matrix of the to-be-sent uplink signal. Compared with a manner in which the precoding matrix of the uplink signal is first quantized, and then the quantized precoding matrix is indicated to the terminal device by using DCI, the manner provided in this embodiment of this application not only can improve precision of the precoding matrix of the uplink signal, but also can reduce indication overheads of the precoding matrix.

Refer to FIG. 4. FIG. 4 is a schematic flowchart of a signal transmission method 400 according to another embodiment of this application. In the method 400, it is assumed that a precoding matrix of a PUSCH includes a first matrix and a second matrix, that is, the precoding matrix of the PUSCH may be obtained by using the first matrix and the second matrix. The method 400 shown in FIG. 4 may include the following steps.

410: A network device sends configuration information of a downlink reference signal. Correspondingly, a terminal device receives the configuration information of the downlink reference signal.

420: The terminal device sends an uplink reference signal. Correspondingly, the network device receives the uplink reference signal.

For steps 410 and 420, refer to steps 310 and 320. Details are not described herein again.

430: The network device generates the downlink reference signal based on the first matrix of the PUSCH.

Step 430 is similar to step 330. A difference lies in that some matrices (namely, the first matrix) used to obtain the precoding matrix of the PUSCH in step 430 are associated with a precoding matrix of the downlink reference signal. Therefore, the network device determines the precoding matrix of the downlink reference signal based on the first matrix.

440: The network device sends the downlink reference signal. Correspondingly, the terminal device receives the downlink reference signal.

For step 430, refer to step 340. Details are not described herein again.

450: The terminal device determines the first matrix based on the downlink reference signal.

Optionally, the terminal device stores the first matrix of the PUSCH. For example, the first matrix may be obtained through statistics collection within a period of time.

For step 450, refer to step 350. Details are not described herein again.

460: The network device sends the second matrix.

For example, the network device sends fourth indication information to the terminal device, where the fourth indication information indicates the second matrix. For details, refer to the related descriptions in the method 200. Details are not described herein again.

470: The terminal device generates the PUSCH based on the first matrix and the second matrix.

For example, the terminal device determines the precoding matrix of the PUSCH based on the first matrix and the second matrix, and then generates the PUSCH based on the precoding matrix. For example, the precoding matrix of the PUSCH = the first matrix * the second matrix.

480: The terminal device sends the PUSCH. Correspondingly, the network device receives the PUSCH.

Based on the foregoing embodiment, the network device may indicate, to the terminal device by using the downlink reference signal, some matrices (such as the first matrix) used to obtain a precoding matrix of an uplink signal. Specifically, the terminal device performs channel estimation based on the received downlink reference signal, and performs SVD on a channel estimation result to obtain the first matrix, and then may determine the precoding matrix of the to-be-sent uplink signal based on the first matrix and an indication of the network device. Compared with a manner in which the precoding matrix of the uplink signal is first quantized, and then the quantized precoding matrix is indicated to the terminal device by using DCI, the manner provided in this embodiment of this application not only can improve precision of the precoding matrix of the uplink signal, but also can reduce indication overheads of the precoding matrix.

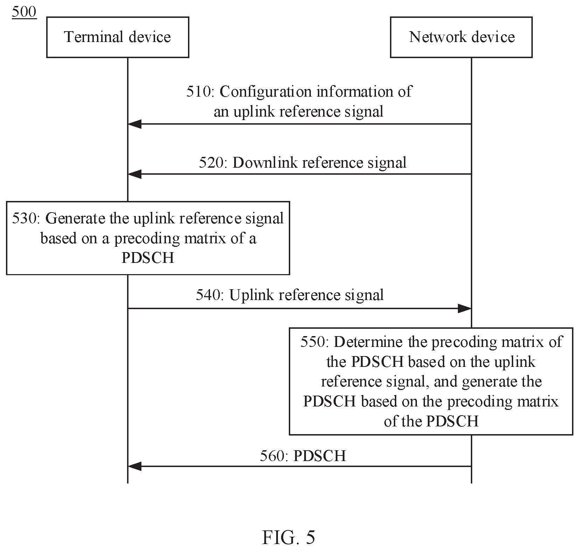

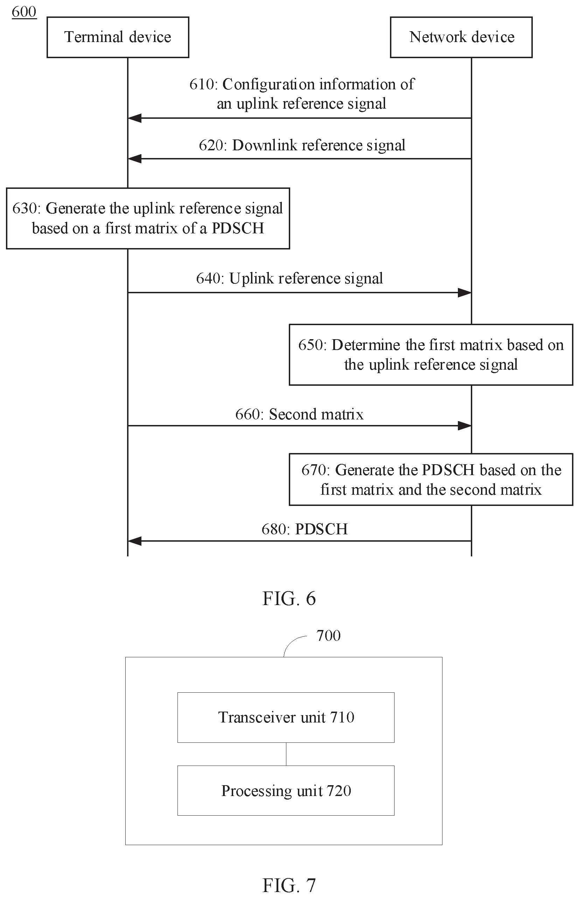

An example in which a reference signal is an uplink reference signal and a data signal is a PDSCH is used below for description with reference to FIG. 5 and FIG. 6.

Refer to FIG. 5. FIG. 5 is a schematic flowchart of a signal transmission method 500 according to another embodiment of this application. The method 500 shown in FIG. 5 may include the following steps.

510: A network device sends configuration information of an uplink reference signal. Correspondingly, a terminal device receives the configuration information of the uplink reference signal.

The configuration information of the uplink reference signal includes information related to the uplink reference signal. For example, the configuration information of the uplink reference signal includes at least one of the following: a transmit port corresponding to the uplink reference signal, a time domain resource of the uplink reference signal, a frequency domain resource of the uplink reference signal, and a receive port corresponding to a PDSCH associated with the transmit port corresponding to the uplink reference signal.

For example, the uplink reference signal is an SRS or the like.

Optionally, the network device configures a DL precoding matrix transmission mode for the terminal device. Specifically, the network device may determine to indicate a precoding matrix of the PDSCH in the manner provided in this embodiment of this application, that is, indicate the precoding matrix of the PDSCH by using the uplink reference signal. The network device may send second indication information to the terminal device, to indicate the DL precoding transmission mode.

520: The network device sends a downlink reference signal. Correspondingly, the terminal device receives the downlink reference signal.

For example, the downlink reference signal is a CSI-RS or the like.

For example, the terminal device may perform channel measurement based on the downlink reference signal, to determine the precoding matrix of the PDSCH. For details, refer to the foregoing descriptions in the term explanation part. In addition, the terminal device may further obtain an uplink channel matrix $H$ based on channel reciprocity.

530: The terminal device generates the uplink reference signal based on the precoding matrix of the PDSCH.

For example, the terminal device determines a precoding matrix of the uplink reference signal based on the precoding matrix of the PDSCH, and then generates the uplink reference signal based on the precoding matrix of the uplink reference signal.

In a possible implementation, the precoding matrix $P_2$ of the PDSCH and the precoding matrix $P_1$ of the uplink reference signal satisfy: $P_1 = H^{11} * H * H^H)^{1} * P_2$, and the terminal device may determine the precoding matrix $P_1$ of the uplink reference signal based on the formula, and the precoding matrix $P_2$ of the PDSCH and the uplink channel matrix $H$ that are determined in step 520.

For example, that the terminal device generates the uplink reference signal based on the precoding matrix of the uplink reference signal may be implemented in the following manner: It is assumed that an uplink reference signal that is present before precoding processing is $S$, and an uplink reference signal $X$ obtained through the precoding processing satisfies: $X = P_1 * S$.

It may be understood that the foregoing is an example for description. The terminal device may alternatively directly generate the uplink reference signal based on the precoding matrix of the PDSCH. For example, the uplink reference signal X generated by the terminal device satisfies: $X = H^{11} * H * H^H)^{1} * P_2 * S$.

540: The terminal device sends the uplink reference signal. Correspondingly, the network device receives the uplink reference signal.

A time-frequency resource of the uplink reference signal may be determined based on the configuration information in step 510 and/or a time-frequency resource of the PDSCH.

In an example, the time-frequency resource of the uplink reference signal is determined based on the configuration information in step 510.

For example, the method 500 includes step 510, and the configuration information in step 510 includes the time-frequency resource of the uplink reference signal. In this case, the time-frequency resource of the uplink reference signal in step 540 may be determined based on the configuration information in step 510.

In another example, the time-frequency resource of the uplink reference signal is determined based on the time-frequency resource of the PDSCH.

For example, the method 500 does not include step 510, or the method 500 includes step 510, and the configuration information in step 510 does not include the time-frequency resource of the uplink reference signal. In this case, the time-frequency resource of the uplink reference signal in step 540 may be determined based on the time-frequency resource of the PDSCH. For example, the time-frequency resource of the uplink reference signal is associated with the time-frequency resource of the PDSCH. Therefore, the terminal device may determine the time-frequency resource of the uplink reference signal based on the time-frequency resource of the PDSCH.

In another example, the time-frequency resource of the uplink reference signal is determined based on the configuration information in step 510 and the time-frequency resource of the PDSCH.

For example, the method 500 includes step 510, and the configuration information in step 510 includes a time domain resource of the uplink reference signal. In this case, the time domain resource of the uplink reference signal in step 540 may be determined based on the configuration information in step 510, and a frequency domain resource of the uplink reference signal may be determined based on a frequency domain resource of the PDSCH. For example, the frequency domain resource of the uplink reference signal is associated with the frequency domain resource of the PDSCH. Therefore, the terminal device may determine the frequency domain resource of the uplink reference signal based on the frequency domain resource of the PDSCH.

550: The network device determines the precoding matrix of the PDSCH based on the uplink reference signal, and generates the PDSCH based on the precoding matrix of the PDSCH.

In a possible implementation, the network device performs channel estimation based on the received uplink reference signal and the uplink reference signal (that is, the foregoing S) that is present before the precoding processing to obtain a channel estimation result, then performs SVD processing on the channel estimation result to obtain a left singular matrix and a right singular matrix, and then multiplies the left singular matrix by a conjugate transpose of the right singular matrix to obtain the precoding matrix of the PDSCH.

For example, it is assumed that the uplink reference signal received by the network device is $Y$. In consideration of impact of interference and noise, for example, $Y$ may be represented as: $Y = H * X + N = H * H^{11} * H * H^H)^1 * P_2 * S + N = P_2 * S + N$. The network device performs channel estimation based on $Y$ and $S$ to obtain an equivalent channel matrix $P_2'$, on $P_2'$,

$$P_2' = U \cdot \Sigma \cdot V^H$$. In this case, $P_2 = U * V^H$. $U$ $V$ matrix and the right singular matrix respectively.

That the network device generates the PDSCH based on the precoding matrix of the PDSCH may be implemented in the following manner: It is assumed that the PDSCH that is present before the precoding processing is PDSCH', and the PDSCH obtained through the precoding processing is $P_2 *$ PDSCH'.

560: The network device sends the PDSCH. Correspondingly, the terminal device receives the PDSCH.

A transmit port corresponding to the PDSCH is a port associated with a receive port corresponding to the uplink reference signal. An association relationship between the transmit port corresponding to the PDSCH and the receive port corresponding to the uplink reference signal may be carried in the configuration information in step 510, or may be predefined or pre-configured. This is not limited herein. For the association relationship between the transmit port corresponding to the PDSCH and the receive port corresponding to the uplink reference signal, refer to related descriptions in the method 200. Details are not described herein again.

Optionally, the network device further sends a DMRS used to demodulate the PDSCH. In this case, a transmit port corresponding to the DMRS may also be a port associated with the receive port corresponding to the uplink reference signal. In other words, the receive port corresponding to the uplink reference signal is associated with the transmit ports corresponding to the PDSCH and the DMRS.

Based on the foregoing embodiment, the terminal device may indicate a precoding matrix of a downlink signal to the network device by using the uplink reference signal. Specifically, the network device performs channel estimation based on the received uplink reference signal, and performs SVD on a channel estimation result, to obtain the precoding matrix of the to-be-sent downlink signal. In the manner provided in this embodiment of this application, not only precision of the precoding matrix of the downlink signal can be improved, but also indication overheads of the precoding matrix can be reduced.

Refer to FIG. 6. FIG. 6 is a schematic flowchart of a signal transmission method 600 according to another embodiment of this application. In the method 600, it is assumed that a precoding matrix of a PDSCH includes a first matrix and a second matrix, that is, the precoding matrix of the PDSCH may be obtained by using the first matrix and the second matrix. The method 600 shown in FIG. 6 may include the following steps.

610: A network device sends configuration information of an uplink reference signal. Correspondingly, a terminal device receives the configuration information of the uplink reference signal.

620: The network device sends a downlink reference signal. Correspondingly, the terminal device receives the downlink reference signal.

For steps 610 and 620, refer to steps 510 and 520. Details are not described herein again.

630: The terminal device generates the uplink reference signal based on the first matrix of the PDSCH.

Step 630 is similar to step 530. A difference lies in that some matrices (namely, the first matrix) used to obtain the precoding matrix of the PDSCH in step 630 are associated with a precoding matrix of the uplink reference signal. Therefore, the terminal device determines the precoding matrix of the uplink reference signal based on the first matrix.

640: The terminal device sends the uplink reference signal. Correspondingly, the network device receives the uplink reference signal.

For step 640, refer to step 540. Details are not described herein again.

650: The network device determines the first matrix based on the uplink reference signal.

Optionally, the network device stores the first matrix of the PDSCH. For example, the first matrix may be obtained through statistics collection within a period of time.

For step 650, refer to step 550. Details are not described herein again.

660: The terminal device sends the second matrix.

For example, the terminal device sends fourth indication information to the network device, where the fourth indication information indicates the second matrix. For details, refer to the related descriptions in the method 200. Details are not described herein again.

670: The network device generates the PDSCH based on the first matrix and the second matrix.

For example, the network device determines the precoding matrix of the PDSCH based on the first matrix and the second matrix, and then generates the PDSCH based on the precoding matrix. For example, the precoding matrix of the PDSCH = the first matrix * the second matrix.

680: The network device sends the PDSCH. Correspondingly, the terminal device receives the PDSCH.

Based on the foregoing embodiment, the terminal device may indicate, to the network device by using the uplink reference signal, some matrices (such as the first matrix) used to obtain a precoding matrix of a downlink signal. Specifically, the network device performs channel estimation based on the received uplink reference signal, and performs SVD on a channel estimation result to obtain the first matrix, and then may determine the precoding matrix of the to-be-sent downlink signal based on the first matrix and an indication of the terminal device. In the manner provided in this embodiment of this application, not only precision of the precoding matrix of the downlink signal can be improved, but also indication overheads of the precoding matrix can be reduced.

It may be understood that in embodiments of this application, interaction between the terminal device and the network device is mainly used as an example for description. This application is not limited thereto. The terminal device may be replaced with a receive end device, and the receive end device may be a terminal device or a network device. The network device may be replaced with a transmit end device, and the transmit end device may be a terminal device or a network device. For example, the "terminal device" may be replaced with a "first terminal device", and the "network device" may be replaced with a "second terminal device".

It may be further understood that, in some embodiments of this application, SVD is mentioned a plurality of times. For example, a first device performs SVD on a channel estimation result, and the SVD represents reduced SVD (reduced SVD). The reduced SVD may also be referred to as compact SVD (compact SVD), or economy-size SVD (economy-size SVD). The following briefly describes a difference between common SVD and the reduced SVD (that is, the SVD mentioned in embodiments of this application).

For a matrix A with M rows and N columns, K is set to be equal to a smallest value in M and N, that is, K = min(M, N). For example, if M is less than N, K = M. For another example, if N is less than M, K = N.

After common SVD is performed on the matrix A, $A = U * S * V^H$, where U is an M * M matrix, S is an M * N diagonal matrix, and V is an N * N matrix. U is a left singular matrix obtained through common SVD, and V is a right singular matrix obtained through common SVD.

After reduced SVD is performed on the matrix A, $A = U_k * S_k * V_{kH}$, $U_k$ is an M * K matrix, $S_k$ is a K * K diagonal matrix, and $V_k$ is an N * K matrix. $U_k$ is first K columns of the left singular matrix obtained through common SVD, and $V_k$ is first K columns of the right singular matrix obtained through common SVD.

It may be further understood that the formulas used in embodiments of this application are merely examples for description and constitute no limitation on the protection scope of embodiments of this application. In a process of calculating the foregoing related parameters, calculation may be performed based on the foregoing formulas, or calculation may be performed based on variations of the foregoing formulas, or calculation may be performed in another manner, to satisfy calculation results of the formulas.

It may be further understood that, in embodiments of this application, an example in which a precoding matrix of a data signal satisfies a left singular matrix multiplied by a conjugate transpose of a right singular matrix is mainly used for description. This is not limited. A variant manner of this manner is also applicable to embodiments of this application. For example, the precoding matrix of the data signal is determined by performing singular value decomposition on a channel estimation result. For another example, the precoding matrix of the data signal is determined by using a left singular matrix and/or a right singular matrix.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that in the foregoing method embodiments, the method and the operation implemented by the terminal device may also be implemented by a component (for example, a chip or a circuit) of the terminal device. In addition, the method and the operation implemented by the network device may also be implemented by a component (for example, a chip or a circuit) of the network device. This is not limited.

The method provided in embodiments of this application is described in detail above with reference to FIG. 2 to FIG. 6. The apparatus provided in embodiments of this application is described below in detail with reference to FIG. 7 to FIG. 9. It should be understood that descriptions of apparatus embodiments correspond to the descriptions of the method embodiments. Therefore, for content that is not described in detail, refer to the foregoing method embodiments. For brevity, details are not described herein.

Refer to FIG. 7. FIG. 7 is a diagram of a communication apparatus 700 according to an embodiment of this application. The apparatus 700 includes a transceiver unit 710. The transceiver unit 710 may be configured to implement a corresponding communication function. The transceiver unit 710 may also be referred to as a communication interface or a communication unit. Optionally, the apparatus 700 further includes a processing unit 720. The processing unit 720 may be configured to perform processing, for example, determine a precoding matrix.

Optionally, the apparatus 700 may further include a storage unit. The storage unit may be configured to store instructions and/or data. The processing unit 720 may read the instructions and/or the data in the storage unit, so that the apparatus implements the foregoing method embodiments.

In a first possible design, the apparatus 700 may be the first device (for example, the first device in FIG. 2, the terminal device in FIG. 3 and FIG. 4, or the network device in FIG. 5 and FIG. 6) in the foregoing embodiments, and the apparatus 700 may implement steps or procedures performed by the first device in the foregoing method embodiments. The transceiver unit 710 may be configured to perform a receiving/sending-related operation (for example, an operation of sending and/or receiving data or a message) of the first device in the foregoing method embodiments. The processing unit 720 may be configured to perform a processing-related operation of the first device in the foregoing method embodiments, or an operation other than receiving and sending (for example, an operation other than sending and/or receiving data or a message).

In a possible implementation, the transceiver unit 710 is configured to receive a reference signal, where the reference signal is obtained through processing by using a precoding matrix of the reference signal, and the precoding matrix of the reference signal is determined based on a precoding matrix of a to-be-sent data signal; the processing unit 720 is configured to determine the precoding matrix of the data signal based on the reference signal; the processing unit 720 is further configured to generate the data signal based on the precoding matrix of the data signal; and the transceiver unit 710 is further configured to send the data signal.

Optionally, a transmit port corresponding to the data signal is associated with a receive port corresponding to the reference signal.

Optionally, the transceiver unit 710 is further configured to receive configuration information of the reference signal, where the configuration information of the reference signal is associated with the transmit port corresponding to the data signal.

Optionally, the transceiver unit 710 is further configured to receive first indication information, where the first indication information indicates an antenna port corresponding to the reference signal, and the antenna port corresponding to the reference signal is determined based on the configuration information of the reference signal.

Optionally, a quantity of antenna ports corresponding to the reference signal is greater than or equal to a quantity of ranks ranks corresponding to the data signal.

Optionally, the transceiver unit 710 is further configured to receive second indication information, where the second indication information indicates that the precoding matrix of the data signal is associated with the precoding matrix of the reference signal. The processing unit 720 is further configured to determine the precoding matrix of the data signal based on the second indication information and the reference signal.

Optionally, the precoding matrix of the reference signal is determined based on the precoding matrix of the data signal and a channel matrix.

Optionally, the precoding matrix of the data signal and the precoding matrix of the reference signal satisfy the following formula:

$$P_1 = H^H * \left( H * H^H \right)^{-1} * P_2$$

Herein, $P_1$ represents the precoding matrix of the reference signal, $P_2$ represents the precoding matrix of the data signal, $H$ represents the channel matrix, and the superscript $H$ represents a conjugate transpose.

Optionally, that the processing unit 720 is configured to determine the precoding matrix of the data signal based on the reference signal includes: The processing unit 720 is configured to determine the precoding matrix of the data signal based on the reference signal and a reference signal that is present before the processing by using the precoding matrix of the reference signal.

Optionally, that the processing unit 720 is configured to determine the precoding matrix of the data signal based on the reference signal and the reference signal that is present before the processing by using the precoding matrix of the reference signal includes: The processing unit 720 is configured to perform channel estimation on the reference signal and the reference signal that is present before the processing by using the precoding matrix of the reference signal, to obtain a channel estimation result; and determine the precoding matrix of the data signal based on the channel estimation result.

Optionally, the transceiver unit 710 is further configured to receive third indication information, where the third indication information indicates the reference signal that is present before the processing by using the precoding matrix of the reference signal.

Optionally, that the processing unit 720 is configured to determine the precoding matrix of the data signal based on the channel estimation result includes: The processing unit 720 is configured to perform singular value decomposition on the channel estimation result to obtain the precoding matrix of the data signal.

Optionally, that the processing unit 720 is configured to perform singular value decomposition on the channel estimation result to obtain the precoding matrix of the data signal includes: The processing unit 720 is configured to perform singular value decomposition on the channel estimation result to obtain a left singular matrix and a right singular matrix, where the precoding matrix of the data signal is determined based on the left singular matrix and the right singular matrix.

Optionally, the precoding matrix of the data signal satisfies: the left singular matrix multiplied by a conjugate transpose of the right singular matrix.

Optionally, the precoding matrix of the data signal includes a first matrix and a second matrix, and the precoding matrix of the reference signal is determined based on the first matrix; and that the processing unit 720 is configured to determine the precoding matrix of the data signal based on the reference signal includes: The processing unit 720 is configured to determine the first matrix based on the reference signal.

Optionally, the transceiver unit 710 is further configured to receive fourth indication information, where the fourth indication information indicates the second matrix.

In a second possible design, the apparatus 700 may be the second device (for example, the second device in FIG. 2, the network device in FIG. 3 and FIG. 4, or the terminal device in FIG. 5 and FIG. 6) in the foregoing embodiments, and the apparatus 700 may implement steps or procedures performed by the second device in the foregoing method embodiments. The transceiver unit 710 may be configured to perform a receiving/sending-related operation (for example, an operation of sending and/or receiving data or a message) of the second device in the foregoing method embodiments. The processing unit 720 may be configured to perform a processing-related operation of the second device in the foregoing method embodiments, or an operation other than receiving and sending (for example, an operation other than sending and/or receiving data or a message).

In a possible implementation, the processing unit 720 is configured to generate a reference signal based on a precoding matrix of the reference signal, where the precoding matrix of the reference signal is determined based on a precoding matrix of a to-be-sent data signal; and the transceiver unit 710 is configured to send the reference signal, where the reference signal is a downlink reference signal, and the data signal is an uplink data signal; or the reference signal is an uplink reference signal, and the data signal is a downlink data signal.

Optionally, a transmit port corresponding to the data signal is associated with a receive port corresponding to the reference signal.

Optionally, the transceiver unit 710 is further configured to send configuration information of the reference signal, where the configuration information of the reference signal is associated with the transmit port corresponding to the data signal.

Optionally, the transceiver unit 710 is further configured to send first indication information, where the first indication information indicates an antenna port corresponding to the reference signal, and the antenna port corresponding to the reference signal is determined based on the configuration information of the reference signal.

Optionally, a quantity of antenna ports corresponding to the reference signal is greater than or equal to a quantity of ranks ranks corresponding to the data signal.

Optionally, the transceiver unit 710 is further configured to send second indication information, where the second indication information indicates that the precoding matrix of the data signal is associated with the precoding matrix of the reference signal.

Optionally, the precoding matrix of the reference signal is determined based on the precoding matrix of the data signal and a channel matrix.

Optionally, the precoding matrix of the data signal and the precoding matrix of the reference signal satisfy the following formula:

$$P_1 = H^H * \left( H * H^H \right)^{1} * P_2$$

Herein, $P_1$ represents the precoding matrix of the reference signal, $P_2$ represents the precoding matrix of the data signal, $H$ represents the channel matrix, and the superscript $H$ represents a conjugate transpose.

Optionally, the precoding matrix of the data signal is determined based on a reference signal that is present before processing by using the precoding matrix of the reference signal and the reference signal obtained through the processing by using the precoding matrix of the reference signal.

Optionally, the transceiver unit 710 is further configured to send third indication information, where the third indication information indicates the reference signal that is present before the processing by using the precoding matrix of the reference signal.

Optionally, the precoding matrix of the data signal is obtained by performing singular value decomposition on a channel estimation result, and the channel estimation result is determined based on the reference signal that is present before the processing by using the precoding matrix of the reference signal and the reference signal obtained through the processing by using the precoding matrix of the reference signal.

Optionally, the precoding matrix of the data signal is determined based on a left singular matrix and a right singular matrix, and the left singular matrix and the right singular matrix are obtained by performing singular value decomposition on the channel estimation result.

Optionally, the precoding matrix of the data signal satisfies: the left singular matrix multiplied by a conjugate transpose of the right singular matrix.

Optionally, the precoding matrix of the data signal includes a first matrix and a second matrix, and the precoding matrix of the reference signal is determined based on the first matrix; and the transceiver unit 710 is further configured to send fourth indication information, where the fourth indication information indicates the second matrix.

It should be understood that a specific process in which the units perform the foregoing corresponding steps is described in detail in the foregoing method embodiments. For brevity, details are not described herein.

It should be understood that the apparatus 700 herein is embodied in a form of a functional unit. The term "unit" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the apparatus 700 may be specifically the communication apparatus in the foregoing embodiments, and may be configured to perform procedures and/or steps corresponding to the communication apparatus in the foregoing method embodiments. To avoid repetition, details are not described herein again.

The apparatus 700 in the foregoing solutions has a function of implementing corresponding steps performed by the communication apparatus in the foregoing methods. The function may be implemented by using hardware, or may be implemented by using hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the method embodiments.

In addition, the transceiver unit 710 may alternatively be a transceiver circuit (for example, the transceiver circuit may include a receiver circuit and a transmitter circuit), and the processing unit may be a processing circuit.

It should be noted that the apparatus in FIG. 7 may be the communication device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

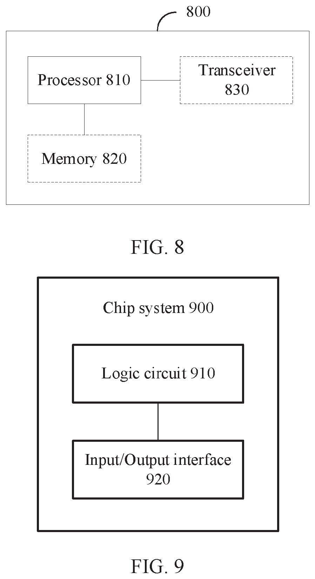

Refer to FIG. 8. FIG. 8 is a diagram of another communication apparatus 800 according to an embodiment of this application. The apparatus 800 includes a processor 810. The processor 810 is coupled to a memory 820. The memory 820 is configured to store a computer program or instructions and/or data. The processor 810 is configured to: execute the computer program or the instructions stored in the memory 820, or read the data stored in the memory 820, to perform the methods in the foregoing method embodiments.

Optionally, there are one or more processors 810.

Optionally, there are one or more memories 820.

Optionally, the memory 820 and the processor 810 are integrated together, or are disposed separately.

Optionally, as shown in FIG. 8, the apparatus 800 further includes a transceiver 830. The transceiver 830 is configured to receive a signal and/or send a signal. For example, the processor 810 is configured to control the transceiver 830 to receive a signal and/or send a signal.

For example, the processor 810 may have a function of the processing unit 720 shown in FIG. 7, the memory 820 may have a function of a storage unit, and the transceiver 830 may have a function of the transceiver unit 710 shown in FIG. 7.

In a solution, the apparatus 800 is configured to implement operations performed by the communication apparatus in the foregoing method embodiments.

For example, the processor 810 is configured to execute the computer program or the instructions stored in the memory 820, to implement related operations of the first device or the second device in the foregoing method embodiments.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification aims to include but is not limited to these memories and any memory of another proper type.

Refer to FIG. 9. FIG. 9 is a diagram of a chip system 900 according to an embodiment of this application. The chip system 900 (or may be referred to as a processing system) includes a logic circuit 910 and an input/output interface (input/output interface) 920.

The logic circuit 910 may be a processing circuit in the chip system 900. The logic circuit 910 may be coupled to a storage unit, and invoke instructions in the storage unit, so that the chip system 900 can implement the methods and functions in embodiments of this application. The input/output interface 920 may be an input/output circuit in the chip system 900, and outputs information processed by the chip system 900, or inputs to-be-processed data or signaling information to the chip system 900 for processing.

In a solution, the chip system 900 is configured to implement operations performed by the communication apparatus (for example, the first device or the second device) in the foregoing method embodiments.

For example, the logic circuit 910 is configured to implement processing related operations performed by the communication apparatus (for example, the first device or the second device) in the foregoing method embodiments, and the input/output interface 920 is configured to implement sending and/or receiving related operations performed by the communication apparatus (for example, the first device or the second device) in the foregoing method embodiments.

An embodiment of this application further provides a computer-readable storage medium. The computer-readable storage medium stores computer instructions used to implement the method performed by the communication apparatus (for example, the first device or the second device) in the foregoing method embodiments.

For example, when a computer program is executed by a computer, the computer is enabled to implement the method performed by the communication apparatus (for example, the first device or the second device) in the foregoing method embodiments.

An embodiment of this application further provides a computer program product including instructions. When the instructions are executed by a computer, the method performed by the communication apparatus (for example, the first device or the second device) in the foregoing method embodiments is implemented.

An embodiment of this application further provides a communication system. The communication system includes the first device and/or the second device in the foregoing embodiments. For example, the system includes the first device and the second device in FIG. 2. For another example, the system includes the terminal device and the network device in FIG. 3 or FIG. 4. For another example, the system includes the terminal device and the network device in FIG. 5 or FIG. 6.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1. A signal transmission method, comprising:

   receiving a reference signal, wherein the reference signal is obtained through processing by using a precoding matrix of the reference signal, and the precoding matrix of the reference signal is determined based on a precoding matrix of a to-be-sent data signal;
   determining the precoding matrix of the data signal based on the reference signal; and
   generating the data signal based on the precoding matrix of the data signal, and sending the data signal.

2. The method according to claim 1, wherein a transmit port corresponding to the data signal is associated with a receive port corresponding to the reference signal.

3. The method according to claim 1 or 2, wherein the method further comprises:
   receiving configuration information of the reference signal, wherein the configuration information of the reference signal is associated with the transmit port corresponding to the data signal.

4. The method according to claim 3, wherein the method further comprises:
   receiving first indication information, wherein the first indication information indicates an antenna port corresponding to the reference signal, and the antenna port corresponding to the reference signal is determined based on the configuration information of the reference signal.

5. The method according to any one of claims 1 to 4, wherein a quantity of antenna ports corresponding to the reference signal is greater than or equal to a quantity of ranks ranks corresponding to the data signal.

6. The method according to any one of claims 1 to 5, wherein the method further comprises:

   receiving second indication information, wherein the second indication information indicates that the precoding matrix of the data signal is associated with the precoding matrix of the reference signal; and
   determining the precoding matrix of the data signal based on the reference signal comprises:
   determining the precoding matrix of the data signal based on the second indication information and the reference signal.

7. The method according to any one of claims 1 to 6, wherein the precoding matrix of the reference signal is determined based on the precoding matrix of the data signal and a channel matrix.

8. The method according to any one of claims 1 to 7, wherein the precoding matrix of the data signal and the precoding matrix of the reference signal satisfy the following formula:

$$P_1 = H^H * \left( H * H^H \right)^{-1} * P_2$$

   wherein $P_1$ represents the precoding matrix of the reference signal, $P_2$ represents the precoding matrix of the data signal, $H$ represents the channel matrix, and the superscript $H$ represents a conjugate transpose.

9. The method according to any one of claims 1 to 8, wherein determining the precoding matrix of the data signal based on the reference signal comprises:
   determining the precoding matrix of the data signal based on the reference signal and a reference signal that is present before the processing by using the precoding matrix of the reference signal.

10. The method according to claim 9, wherein determining the precoding matrix of the data signal based on the reference signal and the reference signal that is present before the processing by using the precoding matrix of the reference signal comprises:

    performing channel estimation on the reference signal and the reference signal that is present before the processing by using the precoding matrix of the reference signal, to obtain a channel estimation result; and
    determining the precoding matrix of the data signal based on the channel estimation result.

11. The method according to claim 10, wherein the method further comprises:
    receiving third indication information, wherein the third indication information indicates the reference signal that is present before the processing by using the precoding matrix of the reference signal.

12. The method according to claim 10 or 11, wherein determining the precoding matrix of the data signal based on the channel estimation result comprises:
    performing singular value decomposition on the channel estimation result to obtain the precoding matrix of the data signal.

13. The method according to claim 12, wherein performing singular value decomposition on the channel estimation result to obtain the precoding matrix of the data signal comprises:
    performing singular value decomposition on the channel estimation result to obtain a left singular matrix and a right singular matrix, wherein the precoding matrix of the data signal is determined based on the left singular matrix and the right singular matrix.

14. The method according to claim 13, wherein the precoding matrix of the data signal satisfies: the left singular matrix multiplied by a conjugate transpose of the right singular matrix.

15. The method according to any one of claims 1 to 14, wherein the precoding matrix of the data signal comprises a first matrix and a second matrix, and the precoding matrix of the reference signal is determined based on the first matrix; and
    determining the precoding matrix of the data signal based on the reference signal comprises:
    determining the first matrix based on the reference signal.

16. The method according to claim 15, wherein the method further comprises:

receiving fourth indication information, wherein the fourth indication information indicates the second matrix.

17. A signal transmission method, comprising:

generating a reference signal based on a precoding matrix of the reference signal, wherein the precoding matrix of the reference signal is determined based on a precoding matrix of a to-be-sent data signal; and
sending the reference signal, wherein
the reference signal is a downlink reference signal, and the data signal is an uplink data signal; or the reference signal is an uplink reference signal, and the data signal is a downlink data signal.

18. The method according to claim 17, wherein a transmit port corresponding to the data signal is associated with a receive port corresponding to the reference signal.

19. The method according to claim 17 or 18, wherein the method further comprises:
sending configuration information of the reference signal, wherein the configuration information of the reference signal is associated with the transmit port corresponding to the data signal.

20. The method according to claim 19, wherein the method further comprises:
sending first indication information, wherein the first indication information indicates an antenna port corresponding to the reference signal, and the antenna port corresponding to the reference signal is determined based on the configuration information of the reference signal.

21. The method according to any one of claims 17 to 20, wherein a quantity of antenna ports corresponding to the reference signal is greater than or equal to a quantity of ranks ranks corresponding to the data signal.

22. The method according to any one of claims 17 to 21, wherein the method further comprises:
sending second indication information, wherein the second indication information indicates that the precoding matrix of the data signal is associated with the precoding matrix of the reference signal.

23. The method according to any one of claims 17 to 22, wherein the precoding matrix of the reference signal is determined based on the precoding matrix of the data signal and a channel matrix.

24. The method according to any one of claims 17 to 23, wherein the precoding matrix of the data signal and the precoding matrix of the reference signal satisfy the following formula:

$$P_1 = H^H * \left( H * H^H \right)^{-1} * P_2$$

wherein $P_1$ represents the precoding matrix of the reference signal, $P_2$ represents the precoding matrix of the data signal, $H$ represents the channel matrix, and the superscript $H$ represents a conjugate transpose.

25. The method according to any one of claims 17 to 24, wherein the precoding matrix of the data signal is determined based on a reference signal that is present before processing by using the precoding matrix of the reference signal and the reference signal obtained through the processing by using the precoding matrix of the reference signal.

26. The method according to claim 25, wherein the method further comprises:
sending third indication information, wherein the third indication information indicates the reference signal that is present before the processing by using the precoding matrix of the reference signal.

27. The method according to claim 25 or 26, wherein the precoding matrix of the data signal is obtained by performing singular value decomposition on a channel estimation result, and the channel estimation result is determined based on the reference signal that is present before the processing by using the precoding matrix of the reference signal and the reference signal obtained through the processing by using the precoding matrix of the reference signal.

28. The method according to claim 27, wherein the precoding matrix of the data signal is determined based on a left singular matrix and a right singular matrix, and the left singular matrix and the right singular matrix are obtained by performing singular value decomposition on the channel estimation result.

29. The method according to claim 28, wherein the precoding matrix of the data signal satisfies: the left singular matrix multiplied by a conjugate transpose of the right singular matrix.

30. The method according to any one of claims 17 to 29, wherein the precoding matrix of the data signal comprises a first matrix and a second matrix, and the precoding matrix of the reference signal is determined based on the first matrix; and

the method further comprises:
sending fourth indication information, wherein the fourth indication information indicates the second matrix.

31. A communication apparatus, comprising a unit configured to perform the method according to any one of claims 1 to 16, or a unit configured to perform the method according to any one of claims 17 to 30.

32. A communication apparatus, comprising a processor, wherein the processor is configured to execute a computer program or instructions stored in a memory, to enable the communication apparatus to perform the method according to any one of claims 1 to 16, or to enable the communication apparatus to perform the method according to any one of claims 17 to 30.

33. The apparatus according to claim 32, wherein the apparatus further comprises the memory and/or a communication interface, and the communication interface is coupled to the processor; and

the communication interface is configured to input and/or output information.

34. The apparatus according to claim 32 or 33, wherein the apparatus is any one of the following: a communication device, a chip, or a chip system.

35. A computer-readable storage medium, wherein the computer-readable storage medium stores a computer program or instructions, and when the computer program or the instructions are run on a communication apparatus, the communication apparatus is enabled to perform the method according to any one of claims 1 to 16, or the communication apparatus is enabled to perform the method according to any one of claims 17 to 30.

36. A computer program product, wherein the computer program product comprises a computer program or instructions used to perform the method according to any one of claims 1 to 16, or the computer program product comprises a computer program or instructions used to perform the method according to any one of claims 17 to 30.

FIG. 1

200

| First device | | Second device |

210: Receive a reference signal, where the
reference signal is determined based on a
precoding matrix of a to-be-sent data signal

220: Determine the precoding matrix
of the data signal based on the
reference signal

230: Generate the data signal based on
the precoding matrix of the data signal,
and send the data signal

240: Data signal

FIG. 2

300

| Terminal device | | Network device |

310: Configuration information of a
downlink reference signal

320: Uplink reference signal

330: Generate the downlink reference
signal based on a precoding matrix of a
PUSCH

340: Downlink reference signal

350: Determine the precoding matrix of
the PUSCH based on the downlink
reference signal, and generate the
PUSCH based on the precoding matrix
of the PUSCH

360: PUSCH

FIG. 3

400

| Terminal device | | Network device |

410: Configuration information of a
downlink reference signal

420: Uplink reference signal

430: Generate the downlink reference
signal based on a first matrix of a
PUSCH

440: Downlink reference signal

450: Determine the first matrix based
on the downlink reference signal

460: Second matrix

470: Generate the PUSCH based on the
first matrix and the second matrix

480: PUSCH

FIG. 4

500

Terminal device · · · · · · · · · · · · · · · · · Network device

510: Configuration information of
an uplink reference signal

520: Downlink reference signal

530: Generate the uplink reference signal
based on a precoding matrix of a
PDSCH

540: Uplink reference signal

550: Determine the precoding matrix of
the PDSCH based on the uplink
reference signal, and generate the
PDSCH based on the precoding matrix
of the PDSCH

560: PDSCH

FIG. 5

600

| Terminal device | | Network device |

610: Configuration information of
an uplink reference signal

620: Downlink reference signal

630: Generate the uplink reference signal
based on a first matrix of a PDSCH

640: Uplink reference signal

650: Determine the first matrix based on
the uplink reference signal

660: Second matrix

670: Generate the PDSCH based on the
first matrix and the second matrix

680: PDSCH

FIG. 6

700

Transceiver unit 710

Processing unit 720

FIG. 7

800

Processor 810

Transceiver 830

Memory 820

FIG. 8

Chip system 900

Logic circuit 910

Input/Output interface 920

FIG. 9

## INTERNATIONAL SEARCH REPORT

| International application No. |
|---|
| **PCT/CN2023/127108** |

**A. CLASSIFICATION OF SUBJECT MATTER**

H04B 7/0456(2017.01)i

According to International Patent Classification (IPC) or to both national classification and IPC

**B. FIELDS SEARCHED**

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

OETXT; CNTXT; WPABSC; ENTXTC; VEN; DWPI; WPABS; CNKI: 参考信道, 参考信号, 数据信道, 数据信号, 业务信道, 业务信号, 用户数据, 根据, 基于, 确定, 生成, 产生, 得到, 获得, 对应, 关联, 关系, 相关, 映射, 预编码矩阵, reference signal?, data signal?, relation, associated, correlation, corresponding, precoding matrix

**C. DOCUMENTS CONSIDERED TO BE RELEVANT**

| Category* | Citation of document, with indication, where appropriate, of the relevant passages | Relevant to claim No. |
|---|---|---|
| X | WO 2022110056 A1 (HUAWEI TECHNOLOGIES CO., LTD.) 02 June 2022 (2022-06-02) description, page 11, line 22 to page 14, line 10, and page 16, line 27 to page 18, second-to-last line | 1-36 |
| A | WO 2022028617 A1 (ZTE CORP.) 10 February 2022 (2022-02-10) entire document | 1-36 |
| A | CN 108259143 A (CHINA ACADEMY OF TELECOMMUNICATIONS TECHNOLOGY) 06 July 2018 (2018-07-06) entire document | 1-36 |
| A | WO 2022067824 A1 (HUAWEI TECHNOLOGIES CO., LTD.) 07 April 2022 (2022-04-07) entire document | 1-36 |

☐ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **27 February 2024** | **11 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/127108**

| Patent document cited in search report | | | Publication date (day/month/year) | Patent family member(s) | | | Publication date (day/month/year) |
|---|---|---|---|---|---|---|---|
| WO | 2022110056 | A1 | 02 June 2022 | US | 2023291613 | A1 | 14 September 2023 |
| | | | | EP | 4236127 | A1 | 30 August 2023 |
| | | | | CN | 2022110056 | A1 | 14 July 2023 |
| | | | | IN | 202337035691 | A | 08 September 2023 |
| WO | 2022028617 | A1 | 10 February 2022 | CN | 111934732 | A | 13 November 2020 |
| CN | 108259143 | A | 06 July 2018 | KR | 20190090863 | A | 02 August 2019 |
| | | | | EP | 3565161 | A1 | 06 November 2019 |
| | | | | EP | 3565161 | A4 | 01 April 2020 |
| | | | | EP | 3565161 | B1 | 21 April 2021 |
| | | | | US | 2019312697 | A1 | 10 October 2019 |
| | | | | US | 10862644 | B2 | 08 December 2020 |
| | | | | JP | 2019537373 | A | 19 December 2019 |
| | | | | JP | 6992065 | B2 | 13 January 2022 |
| | | | | WO | 2018121671 | A1 | 05 July 2018 |
| | | | | CN | 108259143 | B | 28 February 2020 |
| WO | 2022067824 | A1 | 07 April 2022 | CN | 116235415 | A | 06 June 2023 |

Form PCT/ISA/210 (patent family annex) (July 2022)